# EUROPEAN PATENT SPECIFICATION

(11) **EP 3 951 472 B1**
(45) Date of publication and mention of the grant of the patent: **12.02.2025**
(21) Application number: 20189614.9
(22) Date of filing: 05.08.2020
(51) Int. Cl.: G02B 21/24, G02B 21/36

(54) **AUTOFOCUSING MEANS FOR A MICROSCOPE**
AUTOFOKUSSIERMITTEL FÜR EIN MIKROSKOP
MOYENS DE FOCALISATION AUTOMATIQUE POUR UN MICROSCOPE

(43) Date of publication of application: 09.02.2022
(73) Proprietor: Leica Microsystems CMS GmbH, 35578 Wetzlar (DE)
(72) Inventor: SIECKMANN, Frank, 75031 Eppingen (DE); HECHT, Frank, 68161 Mannheim (DE)
(74) Representative: Dehns Germany Partnerschaft mbB

(56) References cited:
- WO-A1-2009/041918
- WO-A1-2015/007697
- DE-A1- 102018 219 867
- US-A1- 2011 103 679
- US-A1- 2015 006 105

## Description

The present invention relates to an autofocusing system for a microscope, to a corresponding method and to a corresponding computer program.

### Field of the invention

Autofocusing systems for microscopes are known. Particularly in experiments in which a number of objects or sample points in a microscopic sample are analyzed at different spatial positions one after the other and for several times, e.g. during a time lapse experiment, autofocusing systems are advantageous because at such different spatial positions the distances between the microscope objective and the sample to be analyzed, or structures or objects of interest in the sample, are not necessarily the same or do not necessarily remain identical over time, as explained in detail below. Therefore, a refocusing procedure at each or at least a large proportion of the spatial positions must be performed.

US 2015/0006105 A1 discloses a method for operating a scanning microscope system. The optimal number of required through-focus scans, that is required to predict the position of a focal plane of the objective with respect to the object to produce the image with minimized blur, is not pre-determined but rather defined iteratively in real-time, contemporaneously with conducting the sample scanning operation itself.

Most autofocusing methods used in microscopy today are based on either image content analysis or position detection. While the present invention is described hereinbelow with a focus of image content analysis, also position detection may generally be used in the context of the present invention, either as an alternative to image content analysis or as a supporting technique, e.g. for a coarse autofocus setting which is then followed by a fine adjustment using image content analysis.

In autofocusing techniques based on image content analysis, typically the same field of view is imaged at different distances or z positions along the optical axis of the objective, obtaining so-called z stacks of images, and the position corresponding to the image with the highest contrast is determined to be in focus. *In lieu* of the highest contrast, and in-line with the explanations below, also the image comprising the highest information content, the lowest entropy, the highest reflectance or the highest intensity among the images of the z stack, or a combination thereof, may be selected to be the image in focus.

In autofocusing systems based on position detection, on the other hand, a laser spot or a shaped light beam, e.g. an oblique light line, may be projected onto the sample surface, or rather a reference surface such as a coverslip, and the distance may be determined by techniques such as triangulation. Also other methods of position detection, e.g. using capacitive sensors, are known.

Since in image-content analysis a comparatively large number of images has to be collected to establish the best focus, fast defocus events, e.g. when tracking fast-moving living objects, are typically difficult to handle. For position detection systems, on the other hand, e.g. when the reflection of an oblique light beam from a reflective surface of a coverslip, i.e. from a reference surface, is used, typically the position of the reference surface and not that of the sample itself or of an object in the sample is determined. This yields unsatisfactory results when the position of the objects in the sample is not fixed in relation to the reference surface, e.g. in liquid samples, or is impossible when no usable reference surface is present. Therefore, image content analysis is generally considered advantageous, particularly in terms of precision, over position detection in certain circumstances.

In widefield microscopy, a contrast value determined in an image by image content analysis is classically used as a measure of focus. This means that from a plurality of images of a z stack, the image comprising the highest contrast value is determined to be the image in focus, as already mentioned before. In this context, small objects may be found to be in focus if the geometrical center of the object along the optical axis is in the focal plane of the microscope objective, and the image in focus is the image taken at this position. The surface or a specific feature of an object, on the other hand, will be found to be in focus if at least one point of the surface or the feature, e.g. a substantial surface area, is in the focal plane.

In confocal microscopy, on the other hand, every image taken along the optical axis of the objective is, *per* the classical definition, in focus since, at least when a small pinhole is used, all light from above or below the focal plane cannot substantially pass the pinhole and therefore does not form part of the image obtained. However, an image of an object among a plurality of images of a z stack, which can be formed here as well, can be said to be the image in focus when this image comprises, as compared with the other images, the highest degree of information. This may e.g. be the case for the image or plane with the highest fluorescence response.

The definition of an image in focus comprising the highest degree of information also applies to widefield microscopy, where the amount of information typically correlates with image contrast. The term "focus", "in focus", "focused" etc., as understood herein, shall therefore generally describe an image of a plurality of images taken at the same position and in different distances along the optical axis for which a most preferable value for one or more image criteria or content descriptors is obtained, or shall describe the position on the z axis at which such an image is obtained. The present invention is neither limited by the type of microscopy (widefield, confocal, lightsheet, etc.) in which context it is used, nor by the specific focusing technique or techniques which is or which are applied. Be it noted at this point that, hereinbelow, the terms "focusing procedure" and "focus procedure" are used synonymously. This also applies to comparable terms including either "focus" or "focusing" together with "process", "step", "operation", etc.

Particularly in time sequence or time lapse experiments in which e.g. development processes of a plurality of cells at different positions are examined over time, autofocus operations may performed and focus positions, i.e. typically z positions parallel to the optical axis, are recorded for a plurality of spatial positions in a plane orthogonal to the optical axis, i.e. at a plurality of so-called x,y positions, before the actual experiment is started or between the objects of interest in the sample are examined. Such x,y positions are also referred to as target points hereinbelow. As to the specific meaning of the term "target point" in the context of the present invention, reference is made to the explanations below. This approach particularly may take account of an unevenness of the sample which may be the result of a distortion or varying thickness of a sample sections, a distortion of a coverslip, a skewed or slanted sample carrier, different depths in which features of interest are positioned in the sample to be examined, etc., and allows for imaging the sample at different positions of interest at least without the complete autofocusing procedure having to be repeated at each position. This is in particular relevant because, as mentioned, autofocusing techniques based on image content analysis may be rather slow, e.g. when compared to position detection and, when used in connection with certain illumination regimens such as fluorescence excitation, may cause light damages to the sample.

Such a procedure, to which the present invention particularly relates, results in a plurality of focus positions *F*(*x*ᵢ, *y*ᵢ) = *z*ᵢ for the plurality of x,y positions, i.e. the target points, at which the autofocusing operations are performed, forming a so-called focus map. An important advantage of this approach is that it is not necessary to determine all possible focus positions of a specimen at which possible objects of interest are located. Rather, only at selected positions autofocusing operations are performed and focus values are defined, resulting in a the focus map already mentioned at the outset, and other focus positions, e.g. for objects of interest between the individual points of the focus map, are obtained by approximation or interpolation, such that they are readily available for focusing at these positions, at least as an initial setting for a further autofocusing operation. Delaunay Triangulation is often used to estimate missing focus positions, but the present invention is in no way limited by the specific approach used in this context.

As also explained hereinbelow, known systems and methods of obtaining focus maps of the type mentioned suffer from certain disadvantages. It is an object of the present invention to overcome at least some of these disadvantages.

### Disclosure of the invention

Before this background, the present invention provides an autofocusing system for a microscope, a corresponding method and a corresponding computer program with the features of the respective independent claims. Preferred embodiments of the invention are subject of the dependent claims and of the description that follows.

The present invention is generally based on the finding that an essential disadvantage of known autofocusing systems is their static behavior, i.e. it is not possible to automatically adapt the focusing procedure to the sample conditions, particularly in a dynamical manner taking into account changes in the sample effecting the focus positions. Furthermore, known autofocusing systems do not operate intelligently, i.e. it is particularly not possible to define a strategy that describes how the system should further proceed when no focus is found at one position. This is particularly important for automatic processes generating focus maps, because if several focus positions are not found, the focus map based on them may become inaccurate and the experiment may ultimately fail. The reason for this is that, if the number of focus positions which is not found becomes too large, the approach of approximation or interpolation may fail or yield unacceptable results.

Known autofocusing systems also allow no reaction to boundary conditions varying over time during the experiment. For example, in so-called cryo CLEM (CLEM: Correlative Light and Electron Microscopy) samples are used which are placed on deep frozen copper grids at a temperature of typically less than -170 °C. As a result of the low temperatures, residual air humidity is deposited on the grid in the form of ice crystals. This also is the case during focusing or autofocusing operations. The ice formation influences the quality of the focus determination at positions where ice crystals are formed as the images taken at least get blurred, and therefore have reduced information content or contrast.

Furthermore, in known autofocusing systems, no adaptation of the best focus strategy based on sample carrier data is possible. Usually a sample can only be present in a part of the travel range of a motorized sample stage. The area where the sample is located in a microscope is therefore determined by the shape and position of the sample carrier. Since this shape and position is conventionally not used in autofocusing systems, the user has to adjust the sample manually and a corresponding adjustment has to be made over a large range of setting values, of which a large part will not result in a sample image to be obtainable simply because of mechanical constraints of the sample carrier. Also no automatic detection of objects in a sample is possible in conventional autofocusing arrangements, such that the user must tediously manually set the positions where a focus procedure is to be used in such arrangement. This time-consuming setting procedure must conventionally be repeated for each new experiment.

Finally, autofocusing methods known from the prior art use only one focus setup. This means that the focus procedure cannot be made to react to local conditions and no other, better suited focus procedure can be selected in the alternative when the original focus procedure fails or is unsatisfactory.

These disadvantages are at least in part overcome by the autofocusing system for a microscope, the corresponding method and the corresponding computer program provided according to the present invention. For sake of conciseness only, the following explanations are focused on the autofocusing system. These explanations, however, equally apply to a corresponding method, particularly when performed in the inventive system, and to the computer program, particularly when used to perform the method or used in the system.

The autofocusing system provided according to the present invention is adapted to perform at least one autofocusing procedure. In the following, some further terms used in explaining the present invention will be described before turning to details of the present invention and of particularly preferred embodiments thereof.

The term "autofocusing procedure" as used herein shall relate to a sequence of steps resulting in images or focus values at different spatial sample positions for which the system is determined as being focused in the sense already explained above. The focus values may particularly be z positions for the spatial positions at which the autofocusing procedure is performed, i.e. a position along or parallel to an optical axis of the objective of the microscope used in the procedure, or the focus values may indicate, or in other ways relate to, such positions. Hereinbelow, the terms "focus value" and "focus setting" may particularly relate to such z positions. The term "autofocusing operation" is used to refer to the steps for focusing at each spatial position. The spatial positions at which the individual focus procedures are performed, which can also change during the method according to the present invention, are referred to as "target points" or alternatively "target positions".

An autofocusing procedure may be performed, according to the present invention, in "cycles", wherein in one cycle all or a subset of the target points are autofocused, particularly in a predetermined sequence, and wherein in the next cycle this is repeated, particularly using the same or an adapted subset of the target points.

The sequence of steps comprised by an autofocusing procedure, according to the understanding as used herein, each may comprise one or more "autofocusing operations", each autofocusing operation representing an autofocusing being performed at a certain position, i.e. a target point as defined above. The autofocusing operation, in the case of an image-based method, comprises a stepwise adjustment of a value influencing whether an image taken is in focus or not, such as an adjustment of a distance of a sample to a microscope objective in order to obtain a z stack of images. The sequence of autofocusing operations comprised by the autofocusing procedure typically results in a pattern of focus values at the target points, if the autofocusing operations are performed at such points. An autofocus operation, while intended to result in a satisfactory autofocus setting and satisfactory focus value, may nevertheless result in unsatisfactory results. This is the point where the present invention provides advantages.

An autofocusing procedure, or more precisely each autofocusing operation as performed at each target position according to the present invention, may include to use, as the "autofocusing technique", an acquisition of a number of images or image features at different z positions and selecting, particularly based on image content analysis, the image with the most preferred value for one or more image descriptors, the image descriptor or descriptors particularly including an image contrast, an information content, an entropy, an reflectance value or an intensity. The most preferred value may be the highest value, e.g. for image contrast, information content, reflectance or intensity, or it may be the lowest value, e.g. for the entropy, and in any case describes the focus quality. That is, as also explained below, the focus quality may be based on or calculated from the image desrciptor(s). In other cases, the most preferred value may also be the second highest, third highest, second lowest, third lowest or average value, etc. Such descriptors can also be combined and the selection of an image from a z stack of images may also be performed based on any combination of image descriptors as described, which may also be used in a weighted manner or in any other manner found advantageous in the context of the present invention.

In other words, the autofocusing technique used according to the present invention may be a technique based on image content analysis. Also, other image descriptors as those mentioned may be used. The autofocusing procedure, each autofocusing operation of the autofocusing procedure, or a subset thereof, may also include an autofocusing technique which is not based on image content analysis, additionally or in the alternative to an autofocusing technique based on image content analysis, e.g. for coarsely adjusting a focus value at a number of places. An autofocusing procedure, as understood herein, thus may include performing one or more autofocusing techniques at different spatial sample positions and obtaining e.g. numeric values describing a result of the autofocusing techniques performed at the different spatial sample positions in the form of quality descriptors, e.g. a certain contrast or information value, together with autofocus positions at the spatial positions of the sample for which the autofocusing procedure is performed.

Quality descriptors may be based on the image descriptors referred to above. A quality descriptor may e.g. be the most favorable contrast value which was obtained at a certain sample position, i.e. it may be the image descriptor of one of the images obtained at different z positions, or it may be calculated on the basis of one or more image descriptors, particularly as obtained for one of the images taken at different z positions which was found to be best in focus. In other words, a quality descriptor is a descriptor relating to the sample position and may either be an image descriptor of several images taken at the sample position, or it may be calculated or determined based on one or more image descriptors of one or more images taken at the sample position. A quality descriptor may for such a sample position e.g. given as a score or percentage value relating to a theoretical or practical maximum.

In every case, several image descriptors can be used to calculate, e.g. using a predefined formula, to form a quality indicator, or a quality indicator may express values of several image descriptors separately. For example, a contrast and a brightness can be used to calculate a value which can be used as a quality descriptor which can be compared to a threshold or maximum value. In the following, a numerical or other value qualitatively describing the result of a focusing operation is referred to as a focus quality.

As used herein, a "parameter influencing how an autofocusing operation is performed for a target point" may be each and any parameter which influences the position where, and the manner how, the autofocus operation is performed. For example, such parameters may include positions in a horizontal plane orthogonal to the optical axis or positions parallel to the optical axis of a microscope used (i.e. x, y and z positions), a frequency at which an autofocusing operation is performed (i.e. every n-th cycle of an autofocusing procedure), an indication from which timepoint or up to which timepoint in an autofocusing procedure an autofocusing operation is performed at a certain target position, an indicator associating a certain target position to a region in a field to be examined, a number or distances of image planes to be examined, or light parameters, such as a wavelength, a polarization, a brightness or a pattern of light used in the autofocusing operation.

In the context of the present invention the autofocusing procedure includes predefining a set of target points as mentioned above, wherein at least one static rule or at least one dynamic rule exchangeable by a different rule, e.g. comprised in a ruleset, is associated to each of the predefined target points or to a subset thereof, the at least one rule defining at least one initial setting and at least one adaptation instruction for at least one parameter influencing how an autofocusing operation is performed for the target point.

A "rule" is, in the context of the present invention, to be understood as any kind of value, guidance or instruction, or group of values, guidances or instructions, usable to influence the setting of at least one parameter for an autofocusing operation, including, but not limited, to the parameters explained immediately above. An "initial setting" of such a parameter includes the starting value predefined for a certain target point, such as a starting position, a starting wavelength, a starting frequency at which autofocusing operations are performed, or an indication whether an autofocusing operation is, at the beginning of an experiment, deactivated and from which point in time it becomes activated and *vice versa.* A rule may also be exchanged by a different rule, as expressed by the term "dynamic" as used herein, where "dynamic" shall also have the meaning "exchangeable".

According to the present invention, the rules or rulesets, as mentioned, also define at least one "adaptation instruction" for the at least one parameter for the autofocusing operation, which is to be understood as an instruction or preset for a modification to be performed for the rule, e.g. on the basis of time or a detected event or condition. For example, a detected event or condition may be an autofocusing operation being unsuccessful or deteriorating for a certain target point for one or more times, wherein the adaptation instruction then may include that either a change in an autofocusing parameter, such as a wavelength or an exposition time or a position of the target point shall be made. It may also include an instruction to inactivate the autofocusing operation for this target point for some or all future cycles of the autofocusing procedure. Additional examples are given further below. An adaptation instruction may also simply be based on a time having been elapsed, etc. An adaptation instruction may also include that one rule is substituted by a different rule. Generally, the object of adapting the at least one parameter for the autofocusing operation on the basis of a corresponding rule or adaptation instruction is to provide a quality improvement. Generally, parameters can be associated instead of or additional to rules to one or more target point Such parameters generally can be changed by rules defined accordingly.

As an example, a contrast-based autofocusing technique may be used in the autofocusing procedure. A parameter which may be adapted based on an adaptation instruction may be the wavelength of light used in the autofocusing technique. A ruleset used in this connection may include at least two rules, a first rule defining that a change of wavelength shall take place if no satisfactory focus value is obtained, and a second rule may include that the wavelength shall be changed from longer to shorter wavelengths, in order to protect the sample from the higher energies at shorter wavelengths.

An adaptation instruction can also include that one target point may also "inherit" parameter settings of a different target point, particularly of one that is in close proximity, particularly immediately adjacent to, the target point under consideration. A condition for such an adaptation may be that at the target point under consideration, at the parameter settings momentarily used, an autofocusing operation is unsuccessful or delivers a lower-quality autofocus value and at the target point in proximity or adjacent to the target point under consideration the autofocusing operation is successful or results in a higher-quality autofocus value. It may also include that the target point in proximity or adjacent to the target point under consideration is positioned closely enough such that a further autofocusing operation is not necessary to define a focus map. Therefore, the autofocusing operation for the target point under consideration may in this case be omitted, as defined by an adaptation instruction, thus protecting the sample.

The present invention particularly includes that the predefined set of target points are target points forming, or intended to form, a focus map as repeatedly referred to above, and the present invention improves autofocusing such an autofocus map by adapting parameters. The target points may particularly be predefined such as to be arranged in a certain pattern, where adaptation instructions may also include a change of the pattern, such as by rotation, translation, expansion, or shrinking.

According to the present invention, an initial autofocusing operation is initiated for each of the target points predefined accordingly, or a subset thereof, comprising the at least one initial setting as defined by the at least one rule associated to the target point. Hereinbelow, such initial parameters are described with reference to an example where the initial parameters include an initial spatial position of the target point and an initial parameter for the autofocusing technique such as a wavelength or the like. However, also different parameters, as described throughout the present application may be used and the invention is in no way limited by this specific example, which is given for illustrative purposes only. Further embodiments are particularly described in connection with the Figures.

The initial spatial position may, in this example, be an x,y position on, in, or relating to, the sample, where x and y refer to coordinates in a plane perpendicular to the optical axis, as mentioned. The initial autofocusing operation may particularly be the first of a series of autofocusing operations using the same or different autofocusing methods in the autofocusing procedure, i.e. the parameters for the autofocusing operation may also include the autofocusing method used. It may, however, be also the only autofocusing operation performed for some of the target points. As mentioned in more detail below, the initial spatial position can, in this example, particularly be predefined to correspond to a set of spatialpositions particularly suitable for the apparatus of which the autofocusing system is part of, for the type of sample under examination, or to the type of process that is performed, e.g. in a subsequent analysis. The initial parameter for the autofocusing technique, on the other hand, which is used in this example as a further parameter for the autofocusing operation, may particularly be a parameter which is most likely the one resulting in an optimum or at least satisfactory focus quality, such that an adjustment may not be necessary in a subsequent autofocusing procedure.

Generally, said step of performing an initial autofocusing operation comprising an initial spatial position of the target point and an initial parameter for the autofocusing technique as the parameters for the autofocusing operation, or any other initial setting for at least one parameter for the autofocusing operation as defined by the at least one rule or ruleset associated to the target points, respectively, may correspond to conventional autofocusing operations as performed in methods according to the prior art. In conventional autofocusing, however, the initial spatial positions and the initial parameters, or other settings for the at least one parameter for the autofocusing operation, are used as the only and final positions and parameters, i.e. such methods do not include an adaption and adjustment as mentioned before and as performed according to the present invention. The present invention particularly relates, in contrast to such classical autofocusing methods, to further autofocusing operations which are performed additionally to autofocusing operations with such initial settings, particularly when the autofocusing operations with the initial settings such as for the spatial positions and the autofocusing parameters do not yield satisfactory results or fail, which may, in conventional autofocusing systems, result in a too small of points of an focus map being present, as for certain points no focus values are then obtained as a result, as mentioned. The present invention, therefore, makes sure that for a larger number of sample points focus map points can be obtained and in certain embodiments that focus maps can be dynamically adjusted to the type of sample, to the process being performed and to the apparatus being used.

To that end, a key aspect of the present invention includes that for each target point of the predefined set of target points or for a subset of these target points, an adapted autofocusing operation based on the at least one adaptation instruction as defined by the at least one rule associated to the target point, e.g. resulting in at least one of an adapted spatial position of the target point and an adapted parameter for the autofocusing technique, is performed. Using the adapted operation, e.g. including the adapted spatial position and the adapted autofocusing parameter for the actual autofocusing technique, both have the object of improving the autofocusing operation for the respective target points and therefore to obtain a better focus quality, if already in the initial autofocusing operation a successful focusing of some kind, but with insufficient quality, was obtained, or a focus value at all, if in the initial autofocusing operation no focus value could be obtained. This applies to the example of the adapted spatial position of the target point and an adapted parameter for the autofocusing technique, which is again referred to here, but generally to all parameters which can be used accordingly. The present invention, therefore, particularly results in a larger number of usable focus points in a focus map to be determined accordingly, as compared to classical methods.

Summarizing the above, in the autofocusing system according to the present invention, the at least one parameter influencing how an autofocusing operation is performed for the target point includes at least one of a position or position change of the target point (such as to adapt to advantageous positions or position changes), an activation or deactivation pattern of the autofocusing operation for the target point (such as to implement a cyclic skipping of some target points), a frequency in which the target point is subjected to the autofocusing operation (such as to protect certain sample positions), a light parameter used in the autofocusing operation (such as to improve autofocusing and to protect the sample), the autofocusing method used in the autofocusing operation (such as to be able to change the autofocusing method depending on focus quality), and at least one parameter thereof, i.e. of the autofocusing methods (e.g. by taking a larger or smaller number of images to be included in an image stack).

Further summarizing the invention, at least one adaptation instruction comprises at least one of an adaptation of the at least one parameter (such as position, wavelength, etc.), an exchange of the at least one parameter (such as to select a different autofocusing method), an adaptation of the at least one rule, substitution of the at least one rule by at least one different rule, and a deactivation of the at least one rule (in order to better adapt to detected conditions). As mentioned, the at least one adaptation instruction may instruct at least one of a time-dependent adaptation and an adaption as reaction to a detected event.

The adapted autofocusing operation may routinely be performed for all or a predefined subset of the sample points, particularly as defined by adaptation instructions, irrespective of whether the initial autofocusing operation was able to deliver a focus value and what the focus quality of this initial autofocusing operation was. In other words, in such an embodiment always two or more focus operations may be performed and the focus quality of the two or more focus operations may be compared to one another. For example, in the initial autofocusing operation a first illumination regimen and in the adapted autofocusing operation a second illumination regimen may be used and it may be determined at which conditions a better focus operation is possible. The different illumination regimens may e.g. include different light intensities or wavelengths, the latter in particularly resulting in different first sample responses in form of different wavelengths of emitted light, of which the better, i.e. particularly the more intense, or more specific, response may be exploited for the autofocusing operation.

Performing the adapted autofocusing operation routinely for all or a predefined subset of the sample points may e.g. include a random or identical shift in all initial sample positions, particularly as defined by adaptation instructions, to result in adapted spatial positions, such that in the adapted autofocusing operation a slightly different position is observed and particularly subjected to illumination. Such an approach may particularly be advantageous for protecting a sample position from bleaching by irradiating the same position with excessive amounts of light, e.g. for triggering a fluorescence response. At an adapted position which is only slightly shifted from the initial position but still covers a large part of the initial field of view, still essentially the same or comparable focus qualities are to be expected. Thus, using the initial or adapted autofocusing settings at a slightly shifted position allows for a repetition of the autofocusing operation while reducing the risk of damages to the sample due to a repeated irradiation of light at exactly the same position. Shifts in other parameters may likewise be performed and result in other advantages.

As mentioned, the adapted autofocusing operation may also be performed for a subset of the target points only. This can include that an adapted autofocusing operation is performed only for such target points for which either no focus value or a clearly unsatisfactory focus quality is obtained in the initial autofocusing operation. This approach also serves to reduce sample damages due to repeatedly irradiating the sample at the same position for the autofocusing operation because this is performed only for such target points for which this cannot be avoided because otherwise no focus value can be obtained.

A slight shift in the spatial positions at which the repeated or adapted autofocusing operations are performed in an example may serve to reduce sample damage by bleaching for positions at which the adapted autofocusing operation must be performed also in this context. Such a shift may be connected with adapting the autofocusing parameters or other parameters, but this is not necessarily the case because as a result of adapting the position already a position might have been placed into the field of view which results in a successful autofocusing operation without further adapting the autofocusing parameters. However, in an alternative approach the autofocusing parameters and the position may be simultaneously adapted in this context as well. Performing the adapted autofocusing operation for a subset of the target points can include performing the adapted autofocusing operation only for a fixed, i.e. predetermined subset, irrespective of the initial autofocusing operation being successful or not, or for a subset for which the initial autofocusing operation was found to demand an adapted autofocusing operation because of e.g. unsatisfactory results.

The adaption of parameters such as the autofocusing parameters and/or the spatial position of the target point, as e.g. mandated by a corresponding adaptation instruction, may be based, in the context of the present invention, on knowledge of the sample which is presently subjected to examination, of previous autofocusing procedures, and on process conditions and the apparatus used in the present invention, as explained in further detail below.

In any case, the present invention is not limited to perform only one adapted autofocusing operation. For example, if neither the initial autofocusing operation nor a first adapted autofocusing operation yields satisfactory results, one of more further adapted autofocusing operations may be performed comprising further adapted parameters such as at least one of a further adapted spatial position of the target point and a further adapted parameter for the autofocusing technique. The number for further adapted autofocusing operations may be unlimited or limited, particularly for the sake of sample protection and as a result of time constraints.

According to the present invention, an autofocus value for at least some of the target points is further processed, where the term "further processing" may generally relate to electronic processing, e.g. saving or further evaluating, the autofocus value being obtained by the initial autofocusing operation or by the adapted autofocusing operation, particularly for inclusion in a focus map as described before, and/or for use in a subsequent autofocusing operation. If, generally, both the autofocus value being obtained by the initial autofocusing operation and the autofocus value obtained by the adapted autofocusing operation or a further adapted autofocusing operation is found suitable for inclusion into a focus map, the one for which a more preferable autofocus value in the sense explained above is obtained will be included. If no clear distinction is present, the selection may be made randomly or according to a predetermined inclusion rule. Also e.g. an average may be formed.

Generally, cut off values can be used to distinguish between acceptable and not acceptable autofocus values and consequently for a decision to whether autofocus values obtained may be further processed and e.g. included in an autofocus map. According to the present invention, different quality criteria may also be applied for different spatial positions, e.g. based on neighboring spatial positions. For example, if at a first spatial position a high-quality focus value can be obtained, the quality criterion for a neighboring spatial position can be set lower and the focus value can also be included with a generally lower quality for the latter. An uncertainty resulting from including such a lower quality focus value can be compensated e.g. by weighting in an extrapolation procedure based on the focus map.

The at least one rule used according to the present invention, e.g. relating to least one of the initial spatial position of the target point, the initial parameter for the autofocusing technique, the adapted spatial position of the target point and the adapted parameter for the autofocusing technique may be selected using sample, apparatus and/or process information. According to this group of embodiments of the present invention, the autofocusing procedure can most advantageously be adapted to the sample, to the process and the apparatus used such that unnecessary autofocusing operations and therefore possible sample damages can be eliminated and the autofocusing time will become significantly shorter and/or more reliable.

Hereinbelow, the term sample information shall refer to any possible parameters or pieces of information describing a sample to be analyzed according to the present invention, particularly such parameters or pieces of information which are influencing, or expected be influencing, an autofocusing procedure. For example, sample information may include, but are not limited to, a sample origin (e.g. which organism or non-organismic material was the sample taken from?), a sample preparation (e.g. which fixation, staining, embedding, sectioning or mounting procedures did the sample previously undergo?), a sample content (e.g. which objects like cells, multicellular organisms or non-living objects are part of the sample?), a sample type (e.g. is the sample a liquid sample, a smear, a macerate, a microscopic section or a freeze-fracture preparation?), a medical, cytological or biochemical status (e.g. is the sample expected to contain degenerated, cytologically alterated cells, or cells expected to exhibit a changing cytological status or biochemical reaction over time?) or any information derived herefrom or further provided in connection with the sample.

Corresponding sample information may also be obtained in the course of the method according to the present invention and provided in appropriate form, e.g. to other scientists over a network or via a cloud. Sample information which are predefined for one specific type of sample an analyst is intending to analyze may also be obtained via corresponding means of sharing sample information, e.g. a centralized database, a server, or a cloud. Such predefined sample information can also be further refined or defined in the context of the present invention, e.g. by processing the adapted autofocusing parameters and/or the adapted spatial positions, such that refined information on e.g. a temporal behavior of the sample may be obtained. Such refined information can then again be provided via said means of sharing sample information, such that they are available for later experiments or to other analysts. This allows for gradually building a database of sample information which is refined over time. In specific embodiments, such an approach can also include plausibility tests and validation steps, in order to avoid including inappropriate sample information, e.g. resulting from errors in an experiment, in a corresponding database.

Sample information contained in a corresponding database, which is gradually built up for one specific sample or type of sample may be used for a different sample or type of sample which is expected to behave, in terms of "autofocusability", i.e. the parameters influencing an autofocusing behavior, similarly to the sample or type of sample the database was built for. The same applies in cases in which no specific database is built but sample information are simply predefined for one type of sample. For example, one can expect that sample information obtained for a sample of a specific organ or tissue of an organism of a certain taxonomical class, order, family or genus, e.g. of a mammal, which is treated in a certain manner can also be used as sample information for a different organism of the same or similar taxonomical class, order, family or genus, e.g. for a different mammal, in the context of the present invention. Sample information may thus be transferred accordingly, e.g. to samples of similar kind, content or treatment.

In the context of the present invention or its embodimenst just described, the term apparatus information may relate to all information on a device the autofocusing system according to the present inventio is part of or on devices which form part of the autofocusing system, which can influence the autofocusing procedure. For example, such apparatus information includes at least one of a travel range of a sample positioning structure like a stage of a microscope the autofocusing system is part of or associated to, as well as e.g. illumination capabilities of the microscope, autofocusing capabilities of the autofocusing system, and a performance or a processing speed of the autofocusing system.

The term process information shall, in the context of the present invention, relate to all factors influencing the sample during an experiment which performed in the context of the present invention. For example, during an experiment time during which the autofocusing system according to the present invention is in operation, the sample may be actively, passively or incidentally influenced by thawing, heating, cooling, drying, or exposition to certain atmosphere constituents or chemicals which may influence the autofocussability of the sample, features thereof, or objects therein. Such influences are e.g. the result of bleaching, increased or decreased mobility, disintegration, shrinking, expansion, changing of optical densities, displacement, skewing and the like.

The autofocusing procedure may be adapted to the sample by tuning the autofocusing procedure to recognize specific features in the sample. For example, if in an experiment certain cellular features, such as a nucleus, organelles or the cell membrane or cell wall are to be examined, the autofocusing procedure may be adapted accordingly by predefining rules including adaptation instructions which preferably result in these features to be recognized and focused. It should be pointed out that in any embodiment of the present invention, also rules may be dynamically adapted, based on results of autofocusing operations. Such rules and also rules not dynamically adapted may e.g. include that a measure of a focus quality is determined only or preferably for such image regions in which said features are present while others are ignored or given less or no weight. Such image regions can be detected by feature recognition algorithms, by using filters or by other image processing techniques generally known in the prior art.

For example, clearly recognizable features of cells may be used in such a procedure by either selectively focusing such features and ignoring others if these features are those of interest, or by selectively focusing the other features and ignoring the recognized features, if the other features are those of interest. The autofocusing procedure may, in such an embodiment, particularly be adapted to place more or all weight to such features while placing less weight to, or ignoring, others. Corresponding features may particularly include at least one of a specific shape, density, color or fluorescence response.

In a further example, when examining cells with a feature such as a nucleus, which is expected to exhibit the most intense response in fluorescence or image density, and if the nucleus is a feature or object of interest, the autofocusing procedure may be adapted to perform autofocusing only for this structure while features in planes above or below this feature in z direction, or surrounding this feature in an image plane, are attributed less or no weight. If, in a further example, the nucleus is not the feature or object of interest, it may be ignored despite it may be the structure or feature with the most intense response in fluorescence or image density and the autofocusing procedure may place more or all weight to other, less prominent features. Such a behavior can particularly be realized using a low-pass or high-pass filter which may therefore form a part of said predefining the initial or adapted parameter for the autofocusing technique using sample information.

If, in a further example, a sample is treated with a stain detectable by virtue of having a certain color or fluorescence response and accordingly treated portions of the sample are the features or objects of interest, the autofocusing procedure may again be adapted to perform autofocusing only for such structures while structures of a different color or no color or with a different or no fluorescence response are attributed less or no weight. Again, such an approach can also be inverted, i.e. such stained portions may be ignored in the autofocusing procedure. In other words, by a specific way of counter-staining, passages which are unimportant in examination may be made to be ignored in the autofocusing procedure. In both cases, the behavior described can be realized by using color or wavelength filters which may therefore form a part of said predefining the initial or adapted parameter for the autofocusing technique using sample information.

Also information on how a sample changes over time can be preferably be included in advantageous embodiments of the present invention. As mentioned before, for example in experiments using low temperatures, the residual air humidity may be deposited on the sample in the form of ice crystals, effecting the autofocusing procedure. If this is known before performing the experiment, the adaption of the autofocusing procedure can take this into account, either by shifting the spatial position of focus into regions without ice crystals, by adapting focusing parameters, or by eliminating corresponding points from further considerations in regions where focusing becomes impossible as a result of ice formation.

In a further example, the present invention can be used with samples in which a fluorescence response or sample color changes over time. This is e.g. the case in fluorescence imaging of apoptosis or other cell development processes, where the fluorescence response in different cell compartments is expected to decrease or change over time, as e.g. reviewed in Tomography 2015, 1(2), 115-124. In corresponding experiments, the autofocusing procedure performed according to a particularly preferred embodiment of the present invention may take into account that a first point in time fluorescence can preferably be detected at a first wavelength or a first intensity and that at a later point in time the fluorescence can be detected at a second wavelength or a second, particularly lower, intensity.

In other words, if in an initial autofocusing operation an autofocus parameter was set such as to preferably autofocus regions with a fluorescence response at a first wavelength or group of wavelengths, it might be preferable to adapt the autofocusing parameters for the adapted autofocusing operation such that a fluorescence response at a second wavelength or group of wavelengths, which is expected to be present at a later time instead of the first wavelength, is instead or additionally considered or being placed weight onto. If, on the other hand, fluorescence is known to fade out over time, in the adapted fluorescence procedure this can also be taken into account by accepting a lower fluorescence response during later phases or by placing more weight to different sample features instead of the fluorescence or by not further considering the fluorescence in subsequent autofocusing operations because of its possible undetectability.

A further example in which the autofocusing parameters or other criteria such as a focus quality threshold can advantageously adapted in embodiments of the present invention is if cellular development results in changing contrast values over time. This is e.g. the case in mitosis where chromosomes only become recognizable during the early prophase and therefore, as compared to the interphase, a higher contrast value can be observed. Therefore, a lower contrast value must not necessarily relate to external phenomena but may be intrinsically to the sample observed. Such phenomena may be taken into account according to preferred embodiments of the present invention as well.

Sample information can also include information on movement of objects, such as living cells. For example, when sample information include that a certain object is rather static, an adapted autofocusing operation will preferably be performed with no or little adaption of the spatial position. On the other hand, when a certain object is expected to exhibit a high motility in the sample, the adaption of the spatial position in the adapted autofocusing operation will be selected to be correspondingly high. Such an approach can also take into account mobility changes over time, e.g. when a sample temperature, and therefore the mobility of objects, increases or reaches an optimum, or when, due to a reduced amount of available energy or due to decreasing temperature or the temperature leaving the optimum, the mobility of objects decreases. In other words, also indicating or giving information on a sample mobility may form a part of said predefining the initial or adapted parameter for the autofocusing technique using sample information.

Said predefining the initial or adapted parameter for the autofocusing technique using apparatus information is advantageous because doing so the autofocusing operation can be adapted to the hardware used. For example, the autofocusing operation can be adapted to a mechanical sample carrier, e.g. in the form of a sample stage, and the sample travel which is possible in this sample carrier. For example, the autofocusing procedure in this embodiment can be adapted to take images and evaluate these for focus quality only in regions, as defined by the sample carrier, in which the sample may actually be present. This may also include taking into account a combination of sample features and of hardware or apparatus features, e.g. when in one case a sample is provided in a sample carrier for holding a regular microscopic slide and when the sample is arranged between the slide and the coverslip, both with standardized thicknesses, and in another case a sample is provided in a receptacle for a liquid with substantially different dimensions. According to the present invention, both cases may be taken into account and the autofocusing procedure may be adapted accordingly.

The process performed may have a significant influence on the autofocusing procedure and can also be taken into account according to the present invention, as already mentioned before in the context of defining the term process information. For example, if a sample is, during a process of the present invention, exposed to a certain amount of an atmosphere constituent such as an increased oxygen, carbon monoxide, carbon dioxide or nitrous oxide amount, a response of the sample in terms of a specific gene expression resulting in an increased, decreased or different fluorescence, if correspondingly prepared, might be observed. In other words, in this case the process performed may interact with sample features and can cause changes, such that the original sample information as defined above may also preferably include information on how a sample reacts in a specific experiment. The same may apply when the sample is exposed to certain chemicals in a liquid medium, a reduced humidity, an increased or decreased temperature or the like. All such information can also be taken into account according to the present invention and therefore providing such information may form a part of said predefining the initial or adapted parameter for the autofocusing technique using process information according to the present invention or an embodiment thereof.

The autofocusing system according to the present invention may particularly be adapted to perform the autofocusing procedure referred to hereinbefore as a current autofocusing procedure and further to perform at least one preceding autofocus procedure, wherein the at least one rule, e.g. relating to at least one of the initial spatial position of the target point and the initial parameter for the autofocusing technique for the current autofocus procedure is selected on the basis of the at least one preceding autofocus sequence. This allows for an intelligent adaptation of the autofocusing procedure even in cases if no sample, apparatus or process information is available, or may serve to further refine predefined sample, apparatus or process information provided according to an embodiment of the invention as described before.

The terms "preceding" and "current" autofocusing operation, in the context as used herein, are merely used to define a time sequence in which these autofocusing operations are performed. Particularly, preceding and current autofocusing operations may, with the possible exception of different autofocusing parameters and spatial positions, be essentially the same. This is particularly advantageous because this allows autofocusing parameters to be transferred from the preceding autofocusing operations to the current autofocusing operations, or to derive autofocusing parameters for the current autofocusing operations from autofocusing operations used in preceding autofocusing operations, or to use spatial positions used in the preceding autofocusing operations also in the current autofocusing operations or to adapt them as found advantageous.

Generally, when the at least one rule used according to the invention, e.g. relating to at least one of the initial spatial position of the target point and the initial parameter for the autofocusing technique for the current autofocusing procedure is selected on the basis of the at least one preceding autofocusing procedure, this allows for a faster determination of successful parameters for the spatial position of the target point and the autofocusing technique. According to a corresponding embodiment of the present invention, particularly a prediction can made for the initial spatial position of the target point and the initial parameter for the autofocusing technique used in the current autofocusing procedure based on the initial and the adapted position of the target point and the parameter for the autofocusing technique from the preceding autofocusing procedure. In this context, a sample behavior may particularly be derived from a difference between the initial and the adapted position of the target point and/or the initial and the adapted parameter for the autofocusing technique found in the preceding autofocusing procedure. A difference between the initial and the adapted position of the target point in the preceding autofocusing procedure can be used for estimating a mobility and an initial and the adapted parameter for the autofocusing technique in the preceding autofocusing procedure may be used for estimating an optical behavior like fading, intensification, color or fluorescence change.

All further examples hereinbelow are, according to the present invention, implemented on the bais of dynamic or static rules or rule sets defining at least one initial setting and at least one adaptation instruction for at least one parameter influencing how an autofocusing operation is performed, even if this is not specifically mentioned again.

For example, if no autofocus value is obtained by the initial autofocusing operation of the preceding autofocusing procedure and a satisfactory autofocus value is obtained by the adapted autofocusing operation, or if in both cases an autofocus value is obtained but the focus quality is better for the adapted autofocusing operation, an amount of change during adapting the autofocusing parameters and/or the sample position between the initial autofocusing operation and in the adapted autofocusing operation in the preceding autofocusing procedure, and a direction of the change, may be used for deriving a value advantageously used for a further adaption in a subsequent autofocusing operation and may be saved or processed accordingly, e.g. in the form of a delta, together with the autofocus value. This delta may be used for a prediction for a subsequent initial autofocus parameter or initial spatial position for a subsequent autofocusing operation.

For example, if an object which was found in a preceding initial autofocusing operation at an initial position and was not found at the initial position but at an adapted position in an adapted autofocusing operation in the preceding autofocusing procedure, this indicates that the object had moved from the initial position to the adapted position. It may be expected that a further movement will be observed, and an estimate for such a further movement may be derived from a time between the initial and the adapted autofocusing operation in the preceding autofocusing procedure and a distance of the movement. A prediction as to a further movement may then be made on the basis of the movement speed and direction derived accordingly and the time between the adapted autofocusing operation of the preceding autofocusing procedure and the initial autofocusing operation of the current autofocusing procedure according to an embodiment of the present invention. In any case, a movement not necessarily must be derived from an initial and an adapted autofocusing operation from a preceding autofocusing procedure but may also be derived from differences detected between preceding autofocusing procedures.

In other words, if it is detected that an object has previously moved this may be an indication that the object will probably continue to move in the same direction and with a same speed, i.e. it will be likely that the object will later, i.e. in a subsequent autofocusing operation, be found at a position corresponding to such a further movement. Such a prediction may also include further sample and/or process information which may similarly influence mobility, as explained in connection with several examples above.

An example for a case in which it is particularly advantageous if the initial parameter for the autofocusing technique for the current autofocusing procedure is predefined on the basis of the at least one preceding autofocusing procedure is when, in the preceding autofocusing procedure or in several preceding autofocusing procedures, a trend in an optical feature of an object or structure, which may be static or not, can be determined and if a trend for future developments may be derived therefrom.

For example, in a preceding autofocusing procedure, a color or fluorescence signal may change, i.e. it may be fade or be substituted by a signal at a different wavelength, and the change in the color or in the fluorescence signal may show a trend. This trend may be used to predict or estimate a further trend which then may be used as a basis for defining the initial parameter for the autofocusing technique for the current autofocusing procedure. Again, such a trend not necessarily must be derived from an initial and an adapted autofocusing operation from a preceding autofocusing procedure but may also be derived from differences detected between several preceding autofocusing procedures.

In a further example, when a trend derived from at least one preceding autofocusing procedure indicates that a certain spatial position becomes unusable for performing an autofocusing operation, e.g. as a result of ice crystals which are increasingly forming at positions in proximity, this information can be used to eliminate corresponding points from further examination or consideration.

In other words, and summarizing the above, according to the present invention, a trend of a change in position and/or at least one optical or sample feature can be derived from the at least one preceding autofocusing procedure and this trend can be used to predict the initial spatial position and/or the initial autofocusing parameter used in the initial autofocusing operation of the subsequent autofocusing procedure, but in embodiments of the present invention also in further autofocusing operations, in order to simplify the present autofocusing procedure and particularly to reduce unnecessary autofocusing operations and associated analysis time and probable sample stress. For deriving a trend and a corresponding prediction, which can particularly include process or sample information or any other useful information as well, techniques as generally known in the art may be used, such as least square or moving average analysis.

According to a particularly preferred embodiment of the present invention, in the autofocusing system the autofocusing operation is performed for such target points for which the initial autofocusing operation is determined to be unsatisfactory, and the adapted autofocusing operation is not performed for such target points for which the initial autofocusing operation is determined to be satisfactory. Details in connection with such an embodiment were already explained before. Not performing the adapted autofocusing operation for such target points for which the initial autofocusing operation is determined to be satisfactory generally serves to reduce sample stress and analysis time.

In the autofocusing system according to the present invention, as already mentioned above as well, the autofocus values from the initial autofocusing operation may be processed for the target points for which the initial autofocusing operation is determined to be satisfactory and the autofocus values from the adapted autofocusing operation may instead be processed for target points for which the adapted autofocusing operation is determined to be satisfactory. Correspondingly, if the initial and the adapted autofocusing operation both result in satisfactory results, generally a quality comparison may be performed and the result determined to be of a higher quality will be processed. If no decision can made, i.e. if the initial and the adapted autofocusing operation both result in satisfactory results and no quality difference can be observed, either value can be used.

In this connection, a satisfactory autofocusing operation not necessarily must be understood to be a autofocusing operation to be determined to be at maximum quality or close to a maximum quality theoretically or practically possible under the circumstances present. Rather, an autofocusing operation may also be determined as satisfactory if it its quality is determined to be sufficient to be e.g. included into a focus map. In defining when an autofocusing operation is satisfactory, generally a sample stress caused by a possible further autofocusing operation, which would become necessary to obtain a result of a higher quality, will be considered, and the question of whether or not a autofocusing operation is satisfactory will advantageously be decided including a compromise.

In other words, according to the present invention, in the autofocusing system preferably at least one of the initial autofocusing operation and the adapted autofocusing operation is determined to be satisfactory if a quality descriptor fulfills a predefined quality criterion and is otherwise determined to be unsatisfactory. The quality criterion, which may relate to at least one of the quality and/or image descriptors as described above, is preferably selected such that the autofocusing value is suitable to be included in a focus map but not necessarily such that an optimum theoretically or practically achievable is reached for the autofocus quality, for the reasons already mentioned above.

In the autofocusing system according to the present invention, the predefined set of target points is preferably predefined to be arranged in a pattern selectively covering an area of a microscopic sample. Such an approach particularly allows for reliably focusing under even complicated experimental conditions, e.g. for time-varying samples or sample regions, in such a way that an ensemble of focus points is obtained. This is particularly the case when the target points are approached in a certain order. In other words, advantageously at least one of the initial autofocusing operations and the adapted autofocusing operations are initiated in a predefined sequence for the target points.

Predefining the set of target points in a pattern selectively covering an area of a microscopic sample and initiating the autofocusing operations in a predefined sequence for the target points may, in a particularly preferred embodiment of the present invention, comprise that an avatar of a sample or sample carrier is defined from which the sample position can be estimated. On this basis, a tactically arranged sequence of target points can be defined, and, as already explained in part, a procedure to evaluate the results of autofocusing operations already carried out with the aim of deciding how to deal with the focus results in the future can be derived. Further, the order of the target points and the method of autofocus depending on local events and analysis results obtained by this method can be defined according to this embodiment.

The avatar of a sample can particularly be used to derive basic data like in which part of the travel path of the microscope stage a sample can be located and which sample points can be approached in the system. By tactically scanning the area thus determined, the sample positions can be determined automatically. Since each autofocusing result can be analyzed and evaluated at any point, as explained in more detail above, an automatic adaption of the autofocusing procedure becomes possible. The possibility of a correctly selected sequence of focus or target positions and an automatic evaluation of the focus results with an optional subsequent adaptation can significantly increase the precision with which the focus is found and the quality of the focus map derived from the focus points. In some cases, favorable target positions can already be derived from the avatar, e.g. when copper grids are used as sample carriers like in CLEM explained above.

In the context of the embodiment of the present invention just explained, the term avatar shall particularly refer to a graphic representation representing the sample and/or the sample holder, particularly to a vector graphic which is true to scale, so that the sample can be completely viewed on a screen. A representation by an avatar is particularly advantageous because a sample is otherwise often not visually observable or only incompletely observable. For example, one often cannot see a sample because the sample is surrounded by equipment. In the case of a cryo CLEM sample, for example, the sample is placed inside a dewar vessel and is treated at temperatures below -170 °C. Under these conditions, a sample is no longer directly visible. Other examples are climate chambers in which a sample is placed in darkness or under defined atmospheric conditions.

The avatar of a sample and/or a sample holder allows to correctly display physically invisible samples or sample areas by showing a lifelike model of the sample and/or sample area on a monitor. On this basis, a placement and a sequence of the target points to be autofocused can be defined. For example, target points are advantageously only placed at positions at which a sample is present, but not at positions which e.g. correspond to grid or frame structures of a sample holder like used in CLEM, or which are not occupied by a sample or a region of interest thereof, e.g. empty regions of a microscopic slide.

According to a particularly preferred embodiment of the present invention, the predefined sequence is predefined according to a different speed of a temporal change of at least one feature of a microscopic sample at the target points. For example, in cryo CLEM, as already explained above, a formation of ice crystals starts from the periphery of the sample carrier, such that it is expected that this region is the first region at which an autofocusing procedure will start to fail. Therefore, the sequence will preferably be adapted to this and the autofocusing procedure will start at the periphery of the sample carrier. Such an approach can be transferred to other samples whose features change over time as well. For example, such an approach can be transferred to cases in which a sample dries, starting at the periphery, or is heated in a central region by illumination light.

In the context of the present invention, autofocusing operations performed at an ensemble of tactically assigned target points and the experimental settings of the experiment may be evaluated to form a specific grid on a specific system. The used ensemble of target positions with the corresponding experimental settings for a specific sample carrier may be loaded into a cloud together with its evaluation and saved as a data set. Over time, the data set will be refined and will ultimately provide the optimal settings for a particular type of sample carrier and for certain experimental settings. A new user can preferably select a specific type of sample carrier and refined settings for the selected target points of the specific kind of sample carrier will be selected and automatically activated.

As repeatedly mentioned above, the processing of the autofocus values for the target points being obtained in the initial autofocusing operations or in the adapted autofocusing operations includes defining a focus map, the focus map indicating focus positions additional to that of the target points from the autofocus values of the target points. The positions additional to that of the target points may be positions interpolated from the target points as explained above using known interpolation techniques.

Merely as a repetition of what is already said above in connection with the corresponding example, the spatial positions of the target points may be adapted in the adapted autofocusing operations by shifting the initial spatial positions of the target points by a predetermined offset. Such an offset may particularly be determined on the basis of sample information, such as a mobility of objects in the sample, as explained above. Also, as to an adaption of the parameters for the autofocusing technique in the adapted autofocusing operations by changing a wavelength used, reference may be made to the explanations above. This also applies for an advantageous embodiment according to which the adapted autofocusing operation for at least some of the target points includes first changing the parameter of the autofocusing technique and subsequently the spatial position.

More generally, according to the present invention, the at least one rule defining the at least one initial setting and at least one adaptation instruction for at least one parameter influencing how an autofocusing operation is performed may also define an adaptation of two, three or more parameters in a predetermined sequence. For example, such a sequence could include a change of (i) a wavelength, (ii) an intensity and (iii) a further parameter, where steps (i) to (iii) can be performed in any order appropriate.

An autofocusing method for use in an autofocusing system of a microscope is also part of the present invention. The autofocusing method includes an autofocusing procedure using an autofocusing technique. The autofocusing procedure comprises predefining a set of target points for autofocusing, wherein at least one static or dynamic rule is associated to each of the predefined target points or to a subset thereof, the at least one rule defining at least one initial setting and at least one adaptation instruction for at least one parameter influencing how an autofocusing operation is performed for the target point, initiating for each of the predefined set of target points or a subset thereof an initial autofocusing operation comprising the at least one initial setting as defined by the at least one rule associated to the target point, initiating for each of the predefined set of target points or a subset thereof an adapted autofocusing operation based on the at least one adaptation instruction as defined by the at least one rule associated to the target point, and further processing an autofocus value for at least some of the target points, the autofocus value being obtained by the initial autofocusing operation or by the adapted autofocusing operation.

As to further embodiments and advantages of the autofocusing method provided according to the present invention, reference is made to the explanations regarding the inventive autofocusing system and its embodiments above. Generally, if aspects have been described in the context of an apparatus or a system herein, it should be noted that these aspects also represent a description of the corresponding method, where a block or device corresponds to a method step or a feature of a method step. Analogously, aspects described in the context of a method step also represent a description of a corresponding block or item or feature of a corresponding apparatus or system. As used herein the term and/or includes any and all combinations of one or more of the associated listed items.

Some or all of the method steps of the method according to the present invention may be executed by or using a hardware apparatus, like for example, a processor, a microprocessor, a programmable computer or an electronic circuit. In some embodiments, some one or more of the most important method steps may be executed by such an apparatus, which is preferably part of a microscope system or computer associated therewith or being part thereof.

Depending on certain implementation requirements, embodiments of the invention can be implemented in hardware or in software. The implementation can be performed using a non-transitory storage medium such as a digital storage medium, for example an HDD, an SSD, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention relate to a data carrier having electronically readable control signals, which are capable of cooperating with a programmable computer system, such that one of the methods described herein is performed. Generally, embodiments of the present invention can be implemented as a computer program product with a program code, the program code being operative for performing one of the methods according to the present invention when the computer program product runs on a computer. The program code may, for example, be stored on a machine-readable carrier.

Other embodiments comprise the computer program for performing one of the methods described herein, stored on a machine-readable carrier. In other words, an embodiment of the present invention is, therefore, a computer program having a program code for performing a method as described herein when the computer program runs on a computer, which may particularly part of a microscope system or is associated therewith.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet. A further embodiment comprises a processing means, for example, a computer or a programmable logic device, configured to, or adapted to, perform one of the methods described herein. A further embodiment of the present invention comprises or relates to a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

The present invention and embodiments thereof will further be described with reference to the appended figures illustrating embodiments of the present invention and background information for better understanding the present invention.

### Short description of the figures

Figure 1 illustrates a system in which the present invention can be implemented.
Figure 2 illustrates an autofocusing procedure according to an embodiment of the present invention in a simplified a partial view.
Figure 3 illustrates associating a tolerance space to different types of target points according to an embodiment of the present invention.
Figures 4A and 4B illustrate changes in an observation region and of different types of target points according to an embodiment of the present invention.
Figures 5A to 5C further illustrate changes in an observation region and of different types of target points according to an embodiment of the present invention.
Figures 6A, 6B, 6C and 6D illustrate a cyclic operation of an autofocusing procedure according to an embodiment of the present invention.
Figure 7 illustrates defining target points for sub-regions of an observation region according to an embodiment of the present invention.
Figure 8 illustrates an adaptation to changing sample conditions of target points according to an embodiment of the present invention.
Figure 9 illustrates a user interface for a computer of an autofocusing system according to an embodiment of the present invention.
Figures 10A and 10B illustrate a method according to a particularly preferred embodiment of the present invention.

### Detailed description of the figures

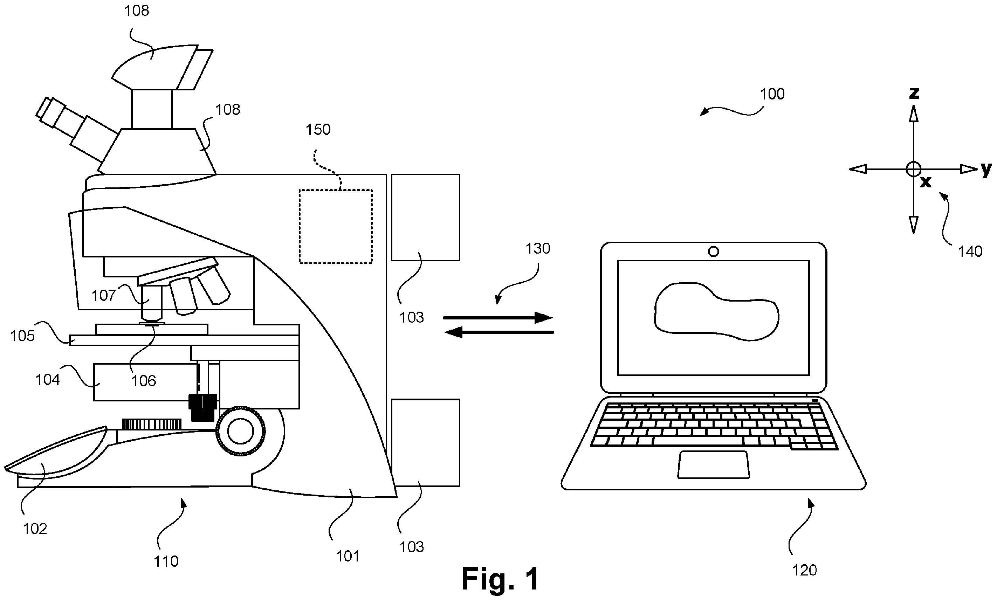

Some embodiments of the present invention can be implemented in a microscope arrangement 100 illustrated in Figure 1. The microscope arrangement 100 is particularly configured to perform a method as described herein, particularly because it comprises an autofocusing system 150 as here schematically illustrated as a part of the arrangement 100.

The system 100 comprises a microscope 110 and a computer system 120. The microscope 110 is configured to communicate with the computer system 120 and vice versa via one or more wireless or wire bound connections as schematically illustrated with arrows 130. A coordinate system comprising coordinates x, y and z is indicated with 140, wherein in the coordinate system 140 the y coordinate and the z coordinates are oriented in parallel to the paper plane and the x coordinate is oriented orthogonal to the x and the y coordinate.

The computer system 120 may be configured to execute at least a part of a method described herein. The autofocusing system 150, which is shown as being integrated into the microscope 110 in the illustration of Figure 1 without any limitation intended to be connected therewith may also be at least in part be integrated into the computer system 120 or provided separately. The computer system 120 may be configured to execute a machine learning algorithm.

The computer system 120 and the microscope 110 may be separate entities but can also be integrated together in one common housing. The computer system 120 may be part of a central processing system of the microscope 110 and/or the computer system 120 may be part of a subcomponent of the microscope 110, such as a sensor, an actor, a camera or an illumination unit, etc. of the microscope 110.

The computer system 120 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 120 may comprise any circuit or combination of circuits.

In one embodiment, the computer system 120 may include one or more processors which can be of any type. As used herein, processor may mean any type of computational circuit, such as, but not limited to, a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 120 may be, without limitation, a custom circuit, an application-specific integrated circuit (ASIC), or the like, such as one or more circuits (such as a communication circuit) for use in wireless devices like mobile telephones, tablet computers, laptop computers, two-way radios, and similar electronic systems.

The computer system 120 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 120 may also include a display device, one or more speakers, and a keyboard and/or controller, which can include a mouse, trackball, touch screen, voice-recognition device, or any other device that permits a system user to input information into and receive information from the computer system 120.

Turning now in more detail to the microscope 110, which will only be described in a highly simplified way, this includes a stand 101 including a touchscreen 102, light sources 103 for transmitted light and incident light illumination, and a condenser arrangement 104. The microscope 110 may particularly be adapted to perform a fluorescence illumination and detection, as generally known from the art.

The microscope 110 further comprises a sample stage 105 on which a microscopic sample 106 can be placed and held in place by appropriate retaining structures. While in Figure 1 the sample stage 105 can be adapted for manual positioning via a coaxial x,y actuator generally known from the art and a coaxial focus adjustment knob for coarse and fine focusing in a z direction, the sample stage 105 is, according to the present invention, as positionable in these directions by electric actors, e.g. on the basis of a signal output by the autofocus system 150, the computer system 120 or an input of a user via the touchscreen 102.

If a sample stage 105 adapted for manual operation is used, the present invention may equally be used in parts. For example, a x,y position sensor adapted to determine the current position of the sample stage 105 may be used and if the sample stage 105 is in close position to a target point for autofocusing, or in a distance sufficiently close thereto (as e.g. determined by comparison with a threshold) the focusing operation according to the rules and parameters defined in the context of the present invention may be used.

Via a microscope objective 107, which may be mounted in an objective revolver together with further objectives of different magnification, and a microscope tube 108 comprising oculars, a microscopic image may be observed. A digital camera 10 or another suitable detector (e.g. in case of a confocal system a point sensor including software to build the image as required for adaptive focussing according to the present invention) is provided and adapted to take images, particularly at different target positions, i.e. x,y positions, and different focus settings, i.e. z settings, and to communicate these images or data derived from such images, to the autofocus system 150 and/or the computer system 120.

An autofocusing method for one target position may particularly include acquiring a z stack of images, as described hereinbefore under defined illumination and/or detection conditions, and to analyze the image of the z stack for features indicating a best focus position. An image obtained accordingly, and/or a z position this image was acquired, is then used to define a focus value for the target position. All method steps of image content analysis may be at least in part be performed in the autofocusing system 150 and/or the computer system 120.

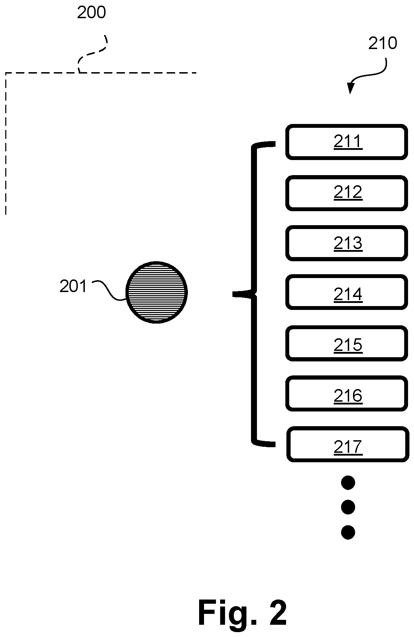

Figure 2 shows a partial view of an autofocusing procedure 200 according to a particularly preferred embodiment of the present invention and particularly illustrates how a ruleset 210 comprising, in the example shown, static and/or dynamic rules and/or parameters 211 to 217 is associated to a predefined target point 201, the rules 211 to 217 of the ruleset 210 defining at least one initial setting and at least one at least one adaptation instruction for at least one parameter influencing how an autofocusing operation is performed for the target point 201.

The parameters may particularly be features of the target point 201 and/or operating parameters of an autofocusing operation, both parameters being parameters influencing how an autofocusing operation is performed for the target point 201. These parameters can particularly be time-dependent, as defined by the adaptation instructions of the rules 211 to 217, and a time-dependent adaptation can particularly be optimized using artificial intelligence.

It should be understood that the autofocusing procedure 200 according to the present invention comprises a number of further method steps and is not limited to the association of the rules 211 to 217 to the target point 201 or several target points. The autofocusing procedure 200 particularly includes autofocusing operations and processing steps as explained hereinabove for different embodiments, and as further elucidated below. In the following, some rules 211 to 217 are illustrated for explanation purposes only and without intending to limit the scope of the present invention or embodiments thereof.

A rule 211 may particularly relate to a time-dependent position X(t) or a constant Position X (in which case there is no adaptation instruction or the adaptation instruction comprises a zero adaptation) of the target point 201 in a first direction on a plane orthogonal to the optical axis. Further or alternative rules 212 and 213, in a similar manner, can indicate a time-dependent position Y(t) or Z(t) or a constant position Y or Z in a second direction on a plane orthogonal to the optical axis or in a direction parallel to the optical axis, respectively. A further or alternative rule 214 may e.g. indicate an interval or an instruction according to which a certain focus position, e.g. the target point 201 is only operated on in every m-th method cycle. For example, a further or alternative rule 215 can be provided, indicating a time T from which a certain focus position, e.g. the target point 201, is activated or deactivated for being autofocused. A further or alternative rule 216 may e.g. indicate an ID characterizing that a certain focus position, e.g. the target point 201, is part of an ensemble of focus positions, e.g. target points 201. A further or alternative rule 217 may also indicate an autofocusing method, as defined hereinabove, which is to be performed at a certain focus position, e.g. the target point 201, and parameters and adaptations thereof.

Rules 211 to 217, or further rules, may e.g. indicate a tolerance in the three-dimensional space in which a certain focus position, e.g. the target point 201 is positioned. Rules 211 to 217, or further rules, may also indicate a pre-processing method to be performed before a specific autofocusing procedure or a positional change is performed, or a corresponding post-processing method to be performed after a specific autofocusing procedure or a positional change has been performed. Such rules may also include a list with focus values obtained for a certain focus position, e.g. the target point 201 before, or an indication that autofocusing at a certain focus position, e.g. the target point 201, does not yield a satisfactory result, such that this focus position, e.g. the target point 201, is to be ignored, etc.

Rules 211 to 217, or further rules, may also be dynamically exchangeable at run-time, such that an adaptation instruction, in this case, may instruct a first rule or parameter is to be substituted by a different rule or parameter, such that an optimization at run-time is possible. Such an exchange can also be based on artificial intelligence (Deep Learning).

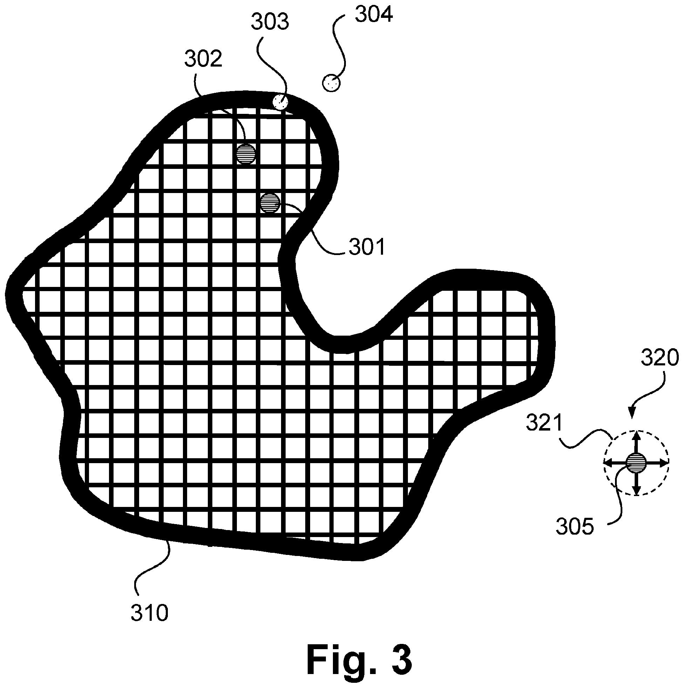

Figure 3 illustrates how a tolerance in the three-dimensional space can be associated, using rules, to a certain focus position, e.g. target points, which are indicated with 301 to 304 in Figure 3. Figure 3 shows a region 310, such as defined by a sample to be observed, in which autofocusing operations are possible. Therefore, a rule may also include where autofocusing operations are to be performed, such that "good" positions for target points 301, 302 (within region 310) are taken into consideration while "bad" positions (outside of region 310, such as target point 304, or at a fringe thereof, such as target point 303) are not taken into consideration.

In a view 320, where a target point 305 of the same type as the target points 301 and 302 is, for illustration purposes only, again shown outside of region 310, it is shown how to a position fₚ(x, y, z) of a target point 305 a three-dimensional tolerance space (e.g. with a certain radius 321) can be associated. A rule may indicate that such a position of the target point 305 in space is reached as soon as a suitable (manual or automatic) positioning system such as stage of a microscope allowing a positioning in the plane orthogonal to the optical axis and also comprising positioning means for positioning in a direction parallel to the optical axis is within radius 321. A three-dimensional tolerance space can also be made adjustable, e.g. by adaptation instructions, and not necessarily has to have a spherical shape defined by a single radius. However, using a spherical shape defined by a single radius simplifies the definition of the three-dimensional tolerance space significantly, as only a single value has to be provided.

It will be readily understood that all target points can be provided with a similar or different tolerance space, such as the spherical tolerance space 321 or any other tolerance space conceivable. A tolerance space can be used for performing an operation such as an autofocusing operation if the position of the system is within the tolerance space. This is also possible, as mentioned, when using manually operable microscope stages and corresponding sensors, thus facilitating positioning by hand as the microscope stage does not have to be positioned with absolute precision in such cases.

Summarizing the above, different sets of parameters and/or rules may be associated with different types of target points 301 to 304, optionally making these target points react differently, particularly according to their position.

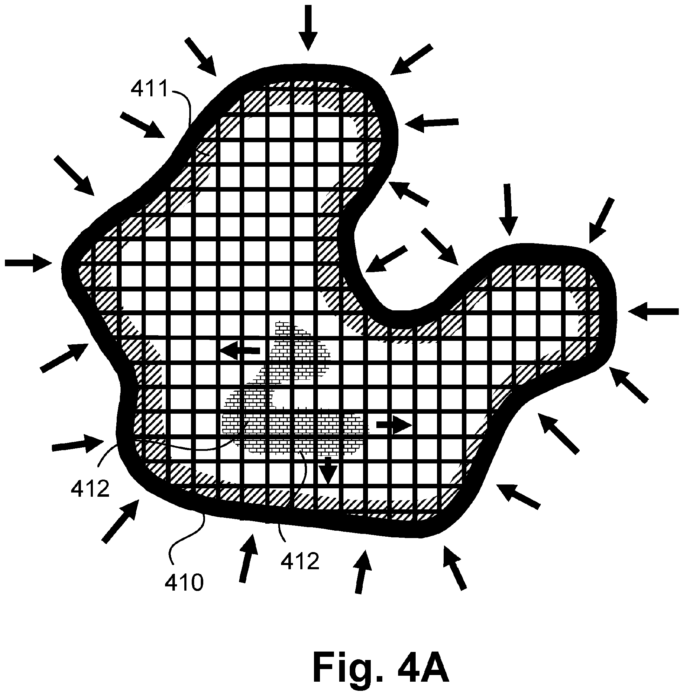

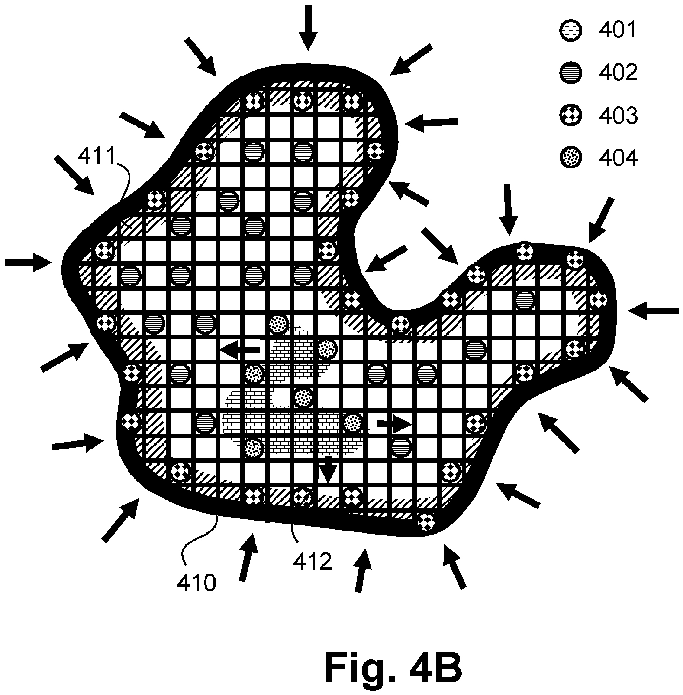

Figures 4A and 4B illustrate how a region, which is designated 410 in Figures 4A and 4B, but largely may correspond to the region 310 explained for Figure 3, such as defined by a sample to be observed, in which autofocusing operations are possible, may change over time. For reasons of clarity, in Figure 4A target points are omitted while they are shown with different patterns in Figure 4B and are designated 401 to 404 here. As above different sets of parameters and/or rules may be associated with the target points 401 to 404, which are therefore also referred to as being different types of target points.

As shown, a reduction of the region 410, as illustrated by a hatched area 411 and inward arrows, may be observed over time, and additionally or alternatively a region 412, as illustrated with a bricked pattern and inward arrows, may develop over time. Phenomena involved here may have different kinetics and may include, but are not limited to, regional spreading of a cell lawn, rust, heat, cold, ice, ablation, bleaching, applied drugs, phototoxic effects, wavelength dependent effects, evaporation, fields, contamination, and other time effects. This e.g. means that, as illustrated in Figure 4B, that target points 402 may be subjected to an autofocusing operation without adaptation of certain parameters over time while an adaptation for target points 403 and 404 may require an adaptation of autofocusing and/or positioning parameters, as e.g. defined in each case by a certain rule. A target point 401 may not be observable in the example shown, such that parameters associated to such a target point may not be defined.

In other words, specialized or individual adaptive autofocusing procedures may be applied, depending on the position at which they are performed, i.e. to which target point 401 to 404 or type of target point they are applied. These adaptive autofocusing procedures may be characterized by their autofocusing procedure, the autofocusing parameters used and the rules defined.

The adaptive autofocusing method for type 402 target points, for example, may be specialized on the inner area while it may be specialized for type 403 on the outer edge and can be configured, for example, to respond optimally to the shrinking of the edge. The adaptive autofocusing method for type 404 target points in may be is optimized for an inner edge 413 of a region 412 (e.g. a hole or a nucleus).

The target points can also mutate. For example, if a region shrinks so much that former target points 402 lie on the outer edge later on, then 402 types could clone to a 403 type. This adaptive behavior could be realized by appropriate rules, as e.g. expressed in common language by "Instruction to type 402: If you recognize an edge by image analysis, clone yourself to type 403". A region could also expand so that former target points of type 403 are later located in the interior of the region. A corresponding rule would e.g. be expressed in common language by: "Instruction to type 403: If no edge is recognized by image analysis, clone yourself to type 402".

For the sake of completeness, it should pointed out that, while the Figures show single regions for target points, an experiment can consist of several regions of identical or different types and that the present invention can be used with any number and type of regions.

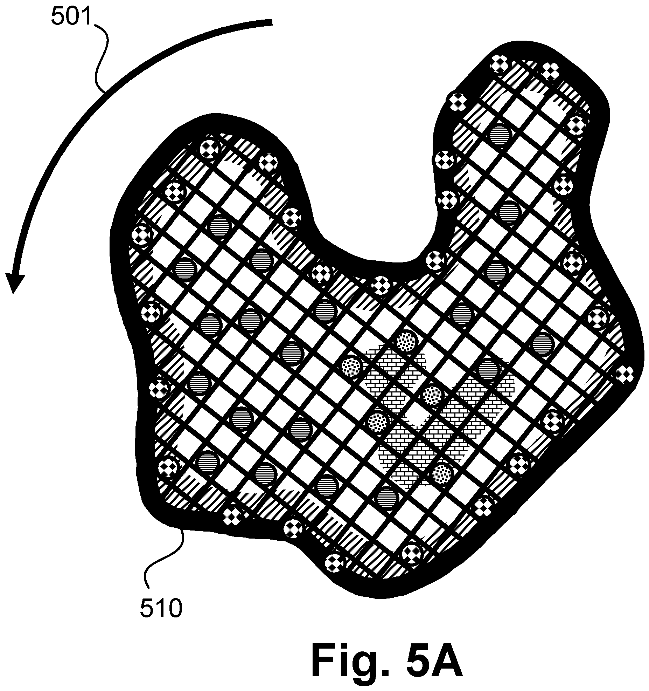

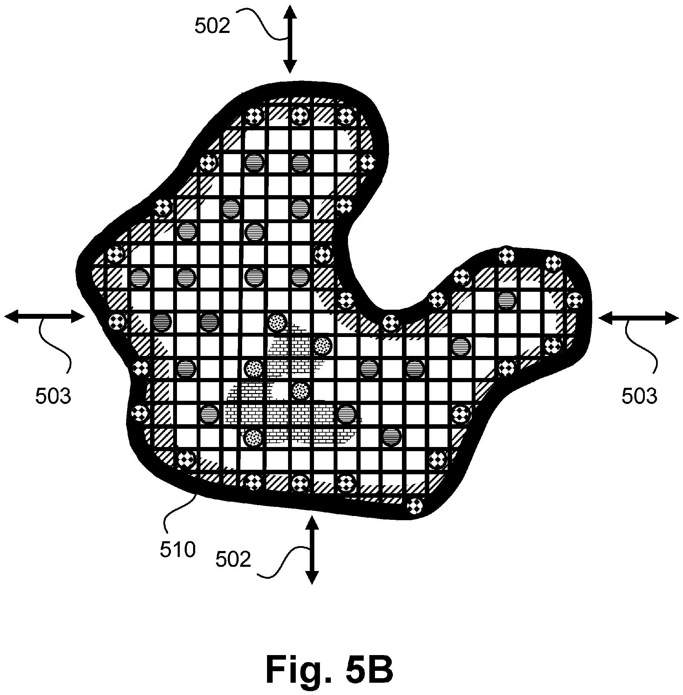

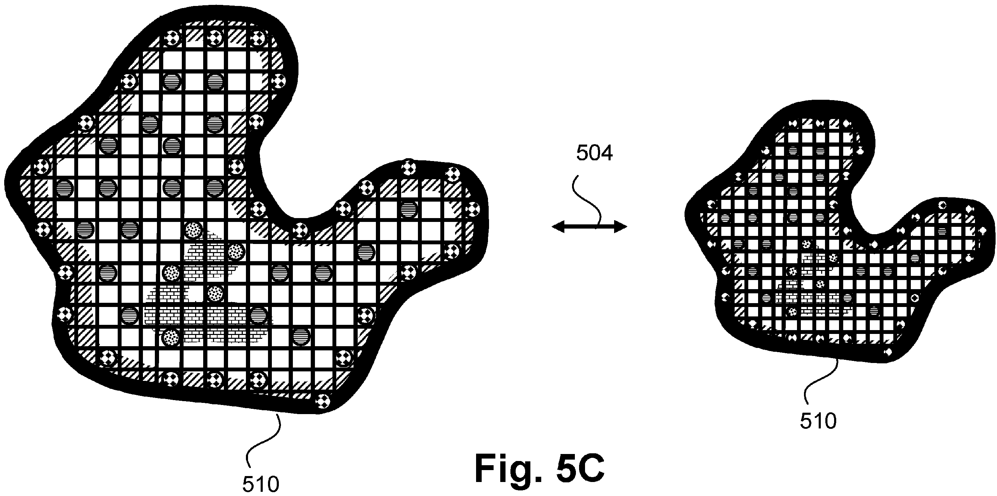

Figures 5A, 5B and 5C illustrate how a region, which is designated 510 in Figures 5A, 5B and 5C, but largely may correspond to the regions 310 and 410 as explained for Figures 3, 4A and 4B, such as defined by a sample to be observed, in which autofocusing operations are possible, may change over time. The changes illustrated include a rotation (see Figure 5A, arrow 501), a displacement in a plane orthogonal to the optical axis (see Figure 5B, arrows 502, 503), and a shrinkage or enlargement (see Figure 5C, arrow 504). Combinations thereof are also possible. Using a rule or ruleset for the target points, which are shown here in different patterns like in Figures 4A and 4B, their position, particularly in a pattern as shown, can be adapted by corresponding translation or rotation instructions.

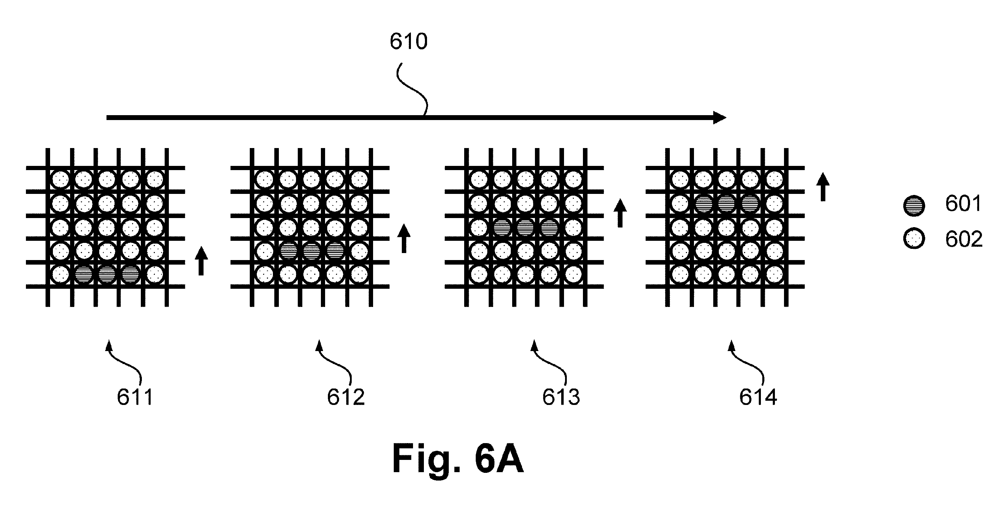

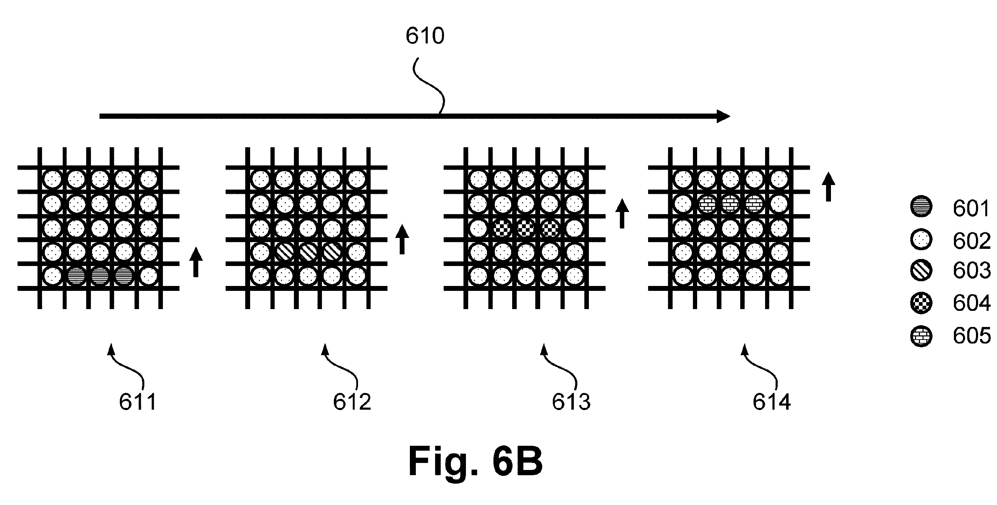

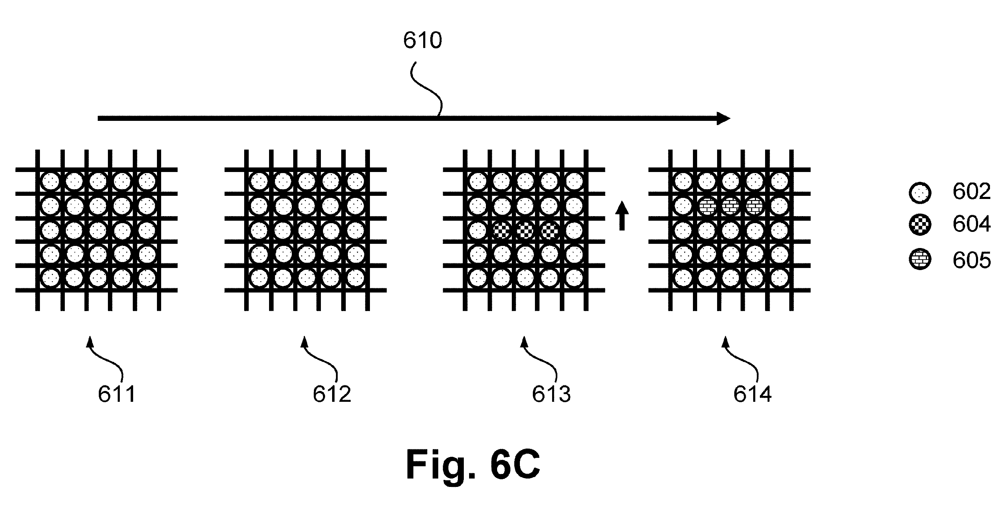

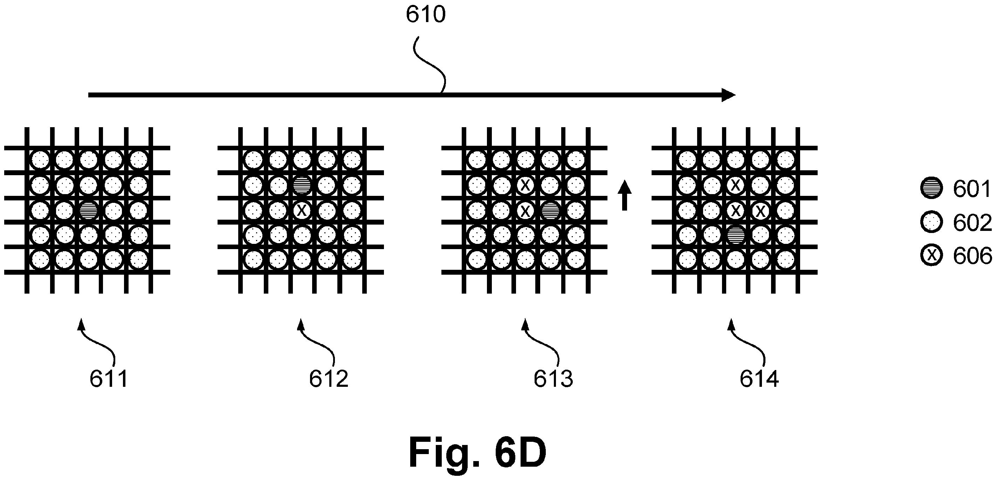

Figures 6A, 6B, 6C and 6D illustrate a cyclic operation of an autofocusing procedure according to an embodiment of the present invention, as defined by rules or rulesets repeatedly referred to above. Each "cycle" referred to hereinbelow for Figures 6A to 6D corresponds to a series of autofocusing operation in the autofocusing procedure, such as the procedure 200 referred to in relation with Figure 2. A time axis, which may be identical or different, is indicated with 610 in each case. The cycles are indicated with 611, 612, 613 and 614 in each case, although different adaptations are made according to Figures 6A to 6D. In all cases, target points are shown as being arranged in a pattern illustrated by horizontal and vertical bars, as before.

As illustrated in connection with Figure 6A, target positions 601 are activated by a corresponding rule while target positions 602 are deactivated. As indicated by an arrow, a corresponding rule may include that instead of target positions 601 which are deactivated in a cycle 612 as compared to a cycle 611 different target positions 601 may become activated while previously activated target positions 601 may become deactivated target positions 602 and so forth. That is, target positions may be shifted and thus adapt to a situation changing over time. As illustrated in connection with Figure 6B, additional to the "shift" shown in Figure 6A, a different parameter may also be defined by a corresponding rule to the newly activated target positions, which are designated 603, 604 and 605 here. More generally, at least one additional parameter and/or ruleset and/or adaptive focus type may be defined. For example, a different autofocusing method, wavelength, etc. may be selected. The explanations in connection with Figure 6B apply to Figure 6C as well. In the embodiment shown in Figure 6C, however, all target points are deactivated target points, i.e. no autofocusing operations are performed, in cycles 611 and 612. As additionally shown in Figure 6D, certain target points indicated 606 may also be permanently deactivated, e.g. as a result of an evaluation of an autofocus value obtained in an autofocusing operation for these target points 606. Reference is also made to the explanations below.

In the present invention, and in the example shown here, generally parameters and rules or rulesets for a target point may be changed. To a target point, also the complete ruleset 210 as explained in Figure 2, may be assigned, such that a target point such as the target point 601 of a certain type may clone into a target point 602 of a different type. Target points can also be changed in a process closely resembling a "mutation" of a biological system and can therefore be part of an "evolution", i.e. parts of their "hereditary code", i.e. its rules and parameters or parameter sets may be adaptively changed and optimized, or even "hereditary code", i.e. rules and parameters or parameter sets or a different type can be integrated into a certain type of target points, such that the former can change into the latter in its behaviour.

More specifically, Figure 6A shows a time series 610 in relation to the adaptive focus positions, i.e. target points. At a first point in time, as indicated with 611, adaptive focus positions 601 in a bottom row are active, i.e. an autofocusing operation is performed here and all other adaptive focus positions 602 are inactive. In subsequent points in time, as illustrated with 612 to 614, the active adaptive focus positions 601 move upwards. In other words, the adaptive focus positions may migrate over time and may thus adapt to a situation changing over time.

Figure 6B shows a time series, again indicated with 610, in relation to the adaptive focus positions, i.e. target points. At a first point in time, as indicated with 611 again, adaptive focus positions 601 in a bottom row are active, i.e. an autofocusing operation is performed here and all other adaptive focus positions 602 are inactive. In subsequent points in time, as illustrated with 612 to 614, the active adaptive focus positions move upwards again, but they also change in type, as illustrated with 603 to 605, e.g. by associating different rules, rulesets or parameters thereto, as described before in different examples.

Figure 6C illustrates a procedure closely resembling the procedure illustrated in Figure 6B, but in a situation when the process is started at a time illustrated with 613 only, i.e. at 611 and 612 still all focus positions are inactive.

Figure 6D specifically relates to a process for determining optimum x,y positions for autofocusing and illustrates steps performed when at specific positions no focus value of sufficient focus quality is found. At time 611, an autofocusing operation is performed at a point [x, y] = [3, 3]. As no focus of sufficient quality is found here, the position [3, 3] is deactivated, as indicated with 606, and e.g. the microscope stage is moved such that position [3, 2] is focusable, as shown for time 612. As no focus of sufficient quality is found at this position [3, 2], it is again deactivated and position [4, 3] is taken into focus, as shown for time 613. Again, no focus is found and, as shown for time 614, position [3, 4] is taken into focus. If for position [3, 4] a focus of sufficient quality is found, this is set as the new target position.

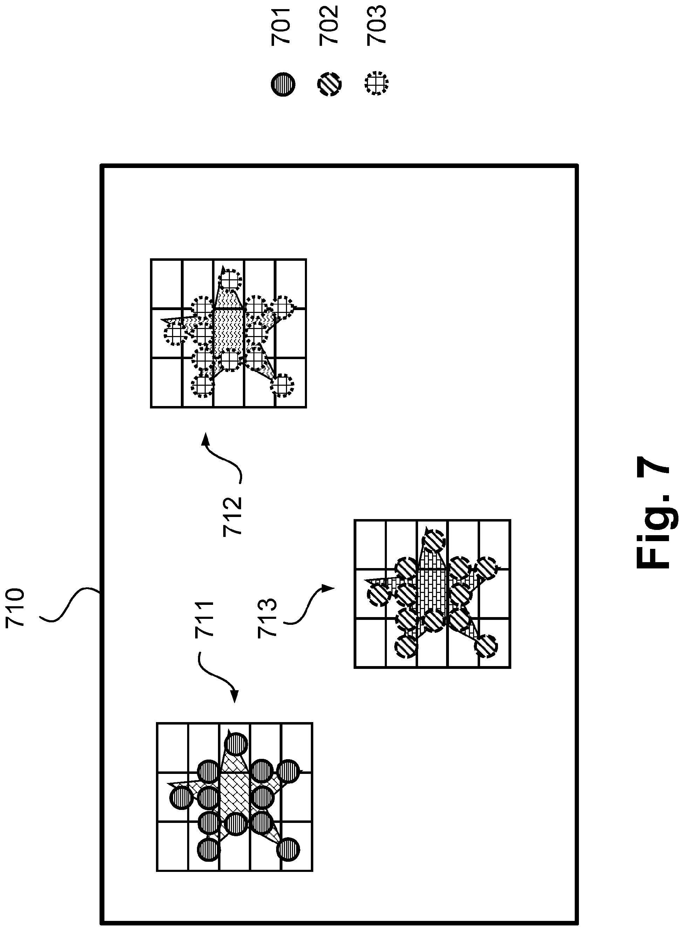

Figure 7 illustrates how, within an observation region 710, such as a microscopic table or a sample region, different sub-regions or "mosaiques" 711, 712, 713 may be defined in which different rules may be assigned to different target points 701, 702, 703. These may e.g. be selected to adapt to a certain tissue, cell type, or sample behavior and may include all parameters or time-dependent or conditional parameter changes as referred to hereinabove. That is, on the basis of Figure 7, a fully automatic determination of the adaptive focus positions by image analysis is described, but for several mosaics (which are also of different sizes). Each mosaic is assigned its own adaptive focus position ensemble.

In Figure 7, more specifically, a preferably fully automatic determination of the adaptive focus positions is illustrated, wherein the contour and the inner areas of several, preferably differently sized areas are detected by image analysis. These areas are recorded by a mosaic scan. Subsequently, the steps of (i) a classification of the type of region (mosaic) -the regions can e.g. be of different types - and (ii) a fully automatic assignment of a target type - each type of regions may automatically be assigned a specific optimized adaptive focusing operation - can be performed.

Target points 701, 702, 703 can correspond to three different adaptive focus types. Each adaptive focus type for target points 701, 702 and 703 has a different set of parameters, rules and focus procedures. There are also three regions in Figure 7, identified by the mosaics 711, 712 and 713. Each mosaic shows a different region, e.g. a different tissue on a microscope slide.

Image analysis may now recognize the tissue type for the mosaics 711, 712 or 713 fully automatically and, in a specific example, may assign to these tissue types automatically (i) the correct adaptive focus type (where mosaic 711 is assigned the adaptive focus procedure for target points 701, mosaic 712 is assigned the adaptive focus procedure for target points 702 and mosaic 713 is assigned the adaptive focus procedure for target points 703) and furthermore (ii) the correct position of the target points (where target points 701 are assigned to the edge of mosaic 711, target points 702 are assigned to the edge of mosaic 712 and target points 703 are assigned to the edge of mosaic 713).

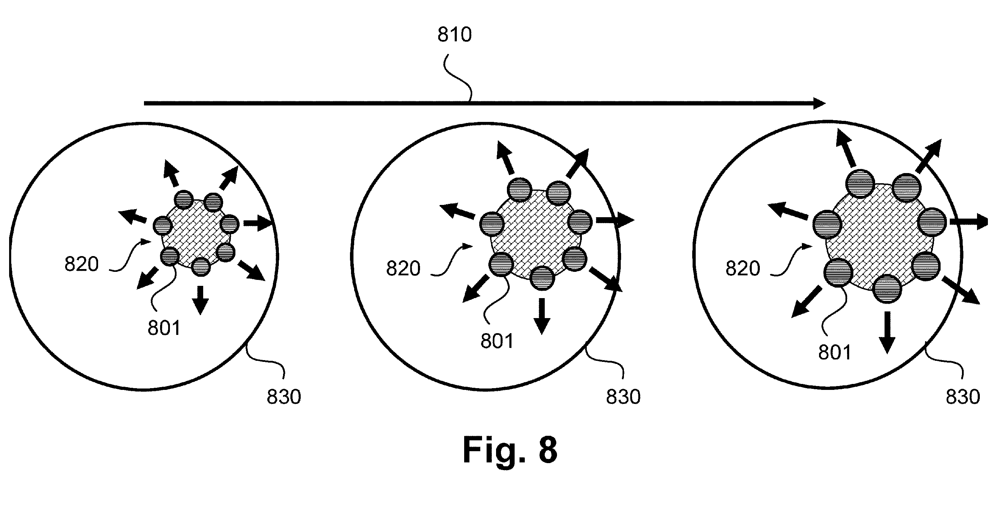

Figure 8 illustrates how a, particularly fully automatic, adaptation to changing sample conditions may be performed using rules associated to target points according to an embodiment of the present invention. A time axis is indicated with 810. In all cases, a sample region 820, such as a cell colony, is present on a suitable carrier 830 such as a petri dish. As shown in three views over time, the sample region 820 expands, e.g. by growth of cells, as indicated by outward arrows, and the target positions 801 are adapted in their position accordingly. That is, a fully automatic adaption of the adaptive autofocusing positions by a formal process is described in connection with Figure 8.

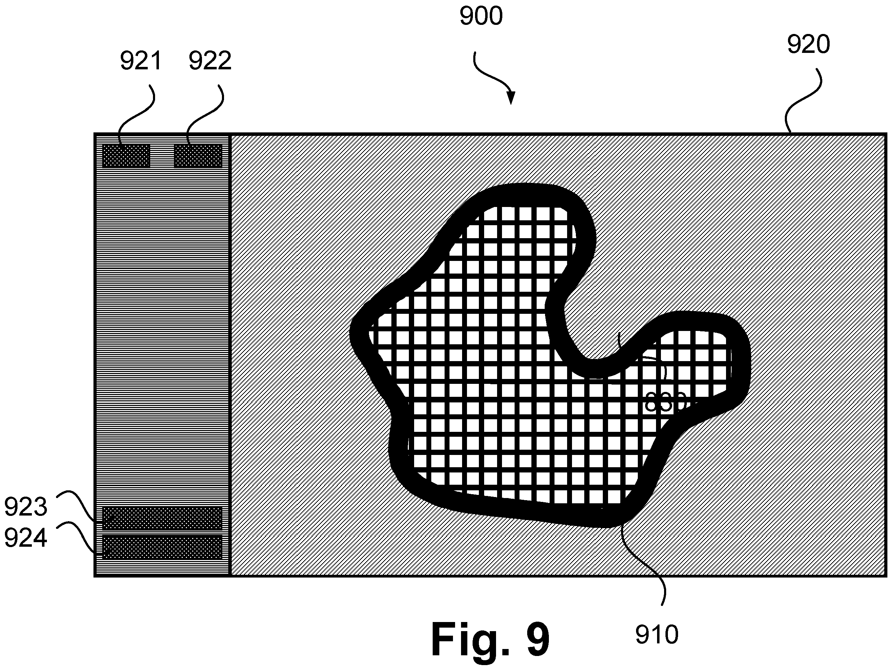

Figure 9 illustrates a user interface 900, e.g. for a local or remote computer 120 as shown in Figure 1, which is adapted to define all of the parameters, rules, rulesets, and target points as explained in numerous different embodiments hereinabove, e.g. including a pattern or grid in a sample region 910, via suitable control regions or means 921, 922, 923 and 924, such as buttons, rulers, selectors, sliders, etc. on a display or display region 920.

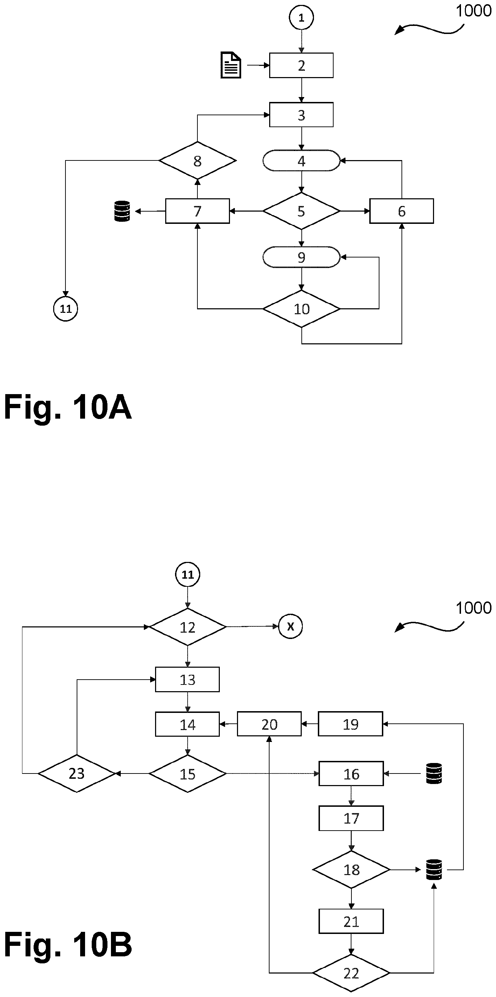

Figures 10A and 10B, which are provided as separate Figures merely for reasons of legibility, illustrate an autofocusing method 1000 according to a particularly preferred embodiment of the present invention which can be at least in part performed in an autofocus system 150, e.g. as shown in Figure 1, or in a corresponding computer system 120.

By adapting both target positions and the properties of the autofocus procedures to dynamically changing experiment conditions by rules associated to target positions, as mentioned above, the method 1000 allows for providing a dynamic focus map that adapts to a specific sample topology. This is achieved through a smart behavior of the target positions and/or additionally their associated focus procedures by assigning them rules and types of behaviors that enable them to respond purposefully to changes. This is illustrated in Figures 10A and 10B in an example including "yes/no" decisions. It should be noted that such decisions may, in embodiments of the present invention, also be taken dynamically and in a manner which is in itself adapted according to rules, in a time-dependent manner, or according to changing conditions as explained above. The limitations shown simply for reasons of conciseness in Figures 10A and 10B are therefore not necessarily present in embodiments of the present invention.

These methods, rules and types of behaviors can, for example, be fixed embedded already and/or derived from databases and/or clouds. Additionally or alternatively, methods, rules and types of behavior can be set using algorithms, dynamically (especially during the runtime of the autofocus procedure) or predefined in advance, in particular by pre-trained and/or during runtime trained neural networks, deep learning and/or machine learning methods and/or exchanged with other machines, as partly mentioned above. These rules and behaviors can be individual for each focus position and each auto-focus procedure assigned to it.

In the method 1000, each target position can be assigned several auto focus procedures *n* (1: *n* relationship), however, each target position can be assigned several non-auto focus methods *m* (1: *m* relationship). Both the non-autofocus methods and the autofocus methods can generate data that can be used to evaluate the quality of a focus value. For further reference, and in relation to other embodiments, reference is made to the explanation of "rules" and "parameters" above. For example, by capturing images using at least one first method, evaluating them analytically and then defining a suitable auto-focus strategy according to the existing rules and behavioral guidelines. Methods, rules and und types of behavior are adaptable in itself. This means that methods, rules and und types of behavior may advantageously also be found automatically or semiautomatically in the method 1000 at least in part.

For example, when starting an experiment including method 1000, the focus position might be known, but not the most suitable auto focus method. In this case, the rules and behavior give us the opportunity to try out several possibly suitable auto focus methods automatically and select the most suitable auto focus method automatically from the test ensemble using a suitable algorithm. The selection criteria for the most suitable autofocus procedure can be supported in particular by machine learning and/or deep learning using suitable neuronal network models in order to choose an optimal solution even for complex autofocus questions.

In step 1 of method 1000, the method is started and in step 2, a set of target positions at specific spatial locations is loaded and/or defined and/or adjusted. In step 2, furthermore, parameters such as, but not limited to, several x,y,z positions including initial target positions, autofocus methods or techniques, image acquisition methods, position behavior instructions, analysis methods and rule sets may be loaded. In a positioning step 3, the method performs a step in which a target position is brought into a position where it can be examined. The target point is then subjected to an autofocusing operation.

Therefore, in method 1000, for each target point of a predefined set of target points which is positioned in step 3, an initial autofocusing operation 4 comprising an initial spatial position of the target point and an initial parameter for the autofocusing technique, which were loaded and/or defined and/or adjusted in loading and/or defining and/or adjusting step 2 is performed.

In the embodiment shown, it is determined in a determination step 5 whether the initial autofocusing operation is satisfactory or unsatisfactory. In case of an unsatisfactory operation, the method may proceed with a wavelength adaptation step 6 in which, in the example shown, a wavelength used in the autofocusing procedure 5 is changed. That is, in other words, for such target points for which the autofocusing operation 4 is determined to be unsatisfactory, an adapted autofocusing operation 4 comprising an adapted parameter for the autofocusing technique, here the wavelength, is used in step 4.

In case of a satisfactory operation, either using the initial settings or after an adaption in step 6, the method may proceed with a processing step 7 in which, on the one hand, an autofocus value or setting for the corresponding target point is processed or saved. The autofocus value is, in the example just explained, thus obtained by the initial or the adapted autofocusing operation. Furthermore, the found, optimized focus values (parameters, methods, rules) are stored for further use. After step 7, the method proceeds to a decision step 8 where an examination is performed whether there are more target points or not. In the former case, a new target point is selected in step 3 and the method proceeds as described.

If neither adaption of the wavelength in step 6 is not found to provide satisfactory results, the method may proceed with a position adaptation step 9 (see also Figure 7), in which a further adaption, such as, in the example shown, an adaption of a target position, may be performed. Again, in a further determination step 10 a check for a satisfactory or an unsatisfactory focusing operation is performed, as described.

When in step decision 8 it is determined that all target positions have been processed, the method proceeds via proceeding step 11 which connects Figures 2A and 2B but not necessarily does involve any method steps, to a further determination step 12, where a determination is made if there are further scanning steps to be performed. If not, the method comes to a halt in a step X. If yes, in a movement step 13, the microscope stage is moved to a next x, y position and in a focus adjustment step 14 the focus is adjusted on the basis of the target points for which autofocusing procedures were performed in steps 1 to 10 and which were selected in step 3. If there is a focus map present, the z position used for focusing is taken from the focus map while if there is no focus map this is calculated based on the focus values for the target points in proximity.

In a further determination step 15, a determination is made whether the current examination position is in proximity of one of the target positions. Each of the target positions may in this context be defined including a dx, dy, dz environment. If the sample stage position is within that environment, an autofocusing is performed and the method proceeds with a movement step 16. If not, the method proceeds with a measurement step 17.

Step 23 includes performing a measurement of a focus at this position against a previously determined autofocusing procedure. Thereafter, if further scan fields are required to be scanned, the method returns to step 13 or otherwise to step 12. Step 16 includes, on the other hand, that the stage is moved to the target point in proximity of the present position and the set of parameters as in step 1 may be loaded. The focus at this position may be measured, in a step 17, using the autofocusing behavior previously found. If the autofocus determination is found to be successful in a step 18, the focus values for this position may be updated and the method may return via an updating step 19, in which a focus map may be updated, to a further proceeding step 20. If not, parameters may be changed in a parameter changing step 21, essentially as described for step 6, and the method performs a further focusing operation. As before, the method may either, if a better focus condition is found, proceed to step 19 or directly to 20 without an update. From step 20, the method proceeds to step 14 as described above.

In other words, in step 23 a focus has been found already and the actual experiment, e.g. obtaining a stack of images, is performed in focus. Step 17, in contrast, is still in the adaptive phase, i.e. the autofocusing operation is performed at this step under setting data (methods, parameters, rules) optimized before. In yet other words, the decision made at step 12 may be translated to read in common language "Is there still anything to do?", steps 14 to 22 belong to the adaptive autofocusing operation, and step 23 relates to performing an experiment.

## Claims

1. An autofocusing system (150) for a microscope (110), the autofocusing system (110) being adapted to perform an autofocusing procedure (200), the autofocusing procedure (200) comprising
- predefining a set of target points (201) for autofocusing, wherein at least one static rule (211-217) or at least one dynamic rule (211-217) exchangeable by a different rule (211-217) is associated to each of the predefined target points (201) or to a subset thereof,
- the at least one rule (211-217) defining at least one initial setting and at least one adaptation instruction for at least one parameter influencing how an autofocusing operation is performed for the target point (201),
- the at least one adaptation instruction comprising at least one of an adaptation of the at least one parameter, an exchange of the at least one parameter, a substitution of the at least one rule (211-217) by at least one different rule, and a deactivation of the at least one rule (211-217), and
- the at least one parameter including at least one of a position or position change of the target point (201), an activation or deactivation pattern of the autofocusing operation (4) for the target point (201), a frequency in which the target point (201) is subjected to the autofocusing operation (4), at least one light parameter used in the autofocusing operation (4), and the autofocusing method used in the autofocusing operation (4),
- initiating for each of the predefined set of target points (201) or a subset thereof an initial autofocusing operation (4) comprising the at least one initial setting as defined by the at least one rule (211-217) associated to the target point (201),
- initiating for each of the predefined set of target points (201) or a subset thereof an adapted autofocusing operation (4) based on the at least one adaptation instruction as defined by the at least one rule (211-217) associated to the target point (201), and
- further processing (7) an autofocus value for at least some of the target points (201), the autofocus value being obtained by the initial autofocusing operation (4) or by the adapted autofocusing operation (4).

2. The autofocusing system (150) according to claim 1, wherein the at least one adaptation instruction instructs at least one of a time-dependent adaptation and an adaption as reaction to a detected event.

3. The autofocusing system (150) according to claim 1 or 2, the autofocusing system (150) being adapted to select the at least one rule (211-217) using sample information describing a sample to be analyzed, apparatus information describing a device which the autofocusing system (110) is part of or one or more devices which form part of the autofocusing system (110) and/or process information describing one or more factors influencing the sample during an experiment.

4. The autofocusing system (150) according to any one of the preceding claims, the autofocusing system (150) being adapted to perform the autofocusing procedure (200) as a current autofocusing procedure and to perform at least one preceding autofocus procedure, wherein the at least one rule (211-217) for the current autofocus procedure (200) is associated to each of the predefined target points (201) or to a subset thereof on the basis of a result of the at least one preceding autofocus procedure.

5. The autofocusing system (150) according to any of the preceding claims, wherein the adapted autofocusing operation (4) is performed for such target points (201) for which the initial autofocusing operation is determined to be unsatisfactory, and wherein the adapted autofocusing operation (4) is not performed for such target points (201) for which the initial autofocusing operation (4) is determined to be satisfactory.

6. The autofocusing system (150) according to any of the preceding claims, wherein the autofocus values from the initial autofocusing operation (4) are processed for the target points (201) for which the initial autofocusing operation (4) is determined to be satisfactory and wherein the autofocus values from the adapted autofocusing operation (4) are instead processed for target points (201) for which the adapted autofocusing operation (4) is determined to be satisfactory.

7. The autofocusing system (150) according to claim 5 or 6, wherein at least one of the initial autofocusing operation (4) and the adapted autofocusing operation (4) is determined to be satisfactory if a quality descriptor fulfills a predefined quality criterion and is otherwise determined to be unsatisfactory.

8. The autofocusing system (150) according to any one of the preceding claims, wherein the predefined set of target points (201) is predefined to be arranged in a pattern selectively covering an area of a microscopic sample (220).

9. The autofocusing system (150) according to any one of the preceding claims wherein at least one of the initial autofocusing operations (4) and the adapted autofocusing operations (4) are initiated in a predefined sequence for the target points (201).

10. The autofocusing system (150) according to claim 9, wherein the predefined sequence is predefined according to a speed of a temporal change of at least one feature of a microscopic sample (120) at the target points (201).

11. The autofocusing system (150) according to any one of the preceding claims, wherein the processing of the autofocus values for the target points (201) being obtained in the initial autofocusing operations (4) or in the adapted autofocusing operations (4) includes defining a focus map, the focus map indicating focus positions additional to that of the target points (201) from the autofocus values of the target points (201).

12. The autofocusing system (150) according to any one of the preceding claims, wherein the at least one rule defining the at least one initial setting and at least one adaptation instruction for at least one parameter influencing how an autofocusing operation is performed defines an adaptation of two , three or more parameters in a predetermined sequence.

13. An autofocusing method for use in an autofocusing system (150) for a microscope (110), preferably according to any one of the preceding claims, the autofocusing method including an autofocusing procedure (200) using an autofocusing technique, the autofocusing procedure (200) comprising
- predefining a set of target points (201) for autofocusing, wherein at least one static rule (211-217) or at least one dynamic rule (211-217) exchangeable by a different rule (211-217) is associated to each of the predefined target points (201) or to a subset thereof,
- the at least one rule (211-217) defining at least one initial setting and at least one adaptation instruction for at least one parameter influencing how an autofocusing operation is performed for the target point (201),
- the at least one adaptation instruction comprising at least one of an adaptation of the at least one parameter, an exchange of the at least one parameter, a substitution of the at least one rule (211-217) by at least one different rule, and a deactivation of the at least one rule (211-217), and
- the at least one parameter including at least one of a position or position change of the target point (201), an activation or deactivation pattern of the autofocusing operation (4) for the target point (201), a frequency in which the target point (201) is subjected to the autofocusing operation (4), at least one light parameter used in the autofocusing operation (4), and the autofocusing method used in the autofocusing operation (4),
- initiating for each of the predefined set of target points (201) or a subset thereof an initial autofocusing operation (4) comprising the at least one initial setting as defined by the at least one rule (211-217) associated to the target point (201),
- initiating for each of the predefined set of target points (201) or a subset thereof an adapted autofocusing operation (4) based on the at least one adaptation instruction as defined by the at least one rule (211-217) associated to the target point (201), and
- further processing (7) an autofocus value for at least some of the target points (201), the autofocus value being obtained by the initial autofocusing operation (4) or by the adapted autofocusing operation (4).

14. Computer program with a program code for performing the method according to claim 13 when the computer program is run on a processor.

## Patentansprüche

1. Autofokussierungssystem (150) für ein Mikroskop (110), wobei das Autofokussierungssystem (110) angepasst ist, um eine Autofokussierungsprozedur (200) durchzuführen, wobei die Autofokussierungsprozedur (200) umfasst
- Vordefinieren eines Satzes von Zielpunkten (201) für die Autofokussierung, wobei jedem der vordefinierten Zielpunkte (201) oder einer Teilmenge davon mindestens eine statische Regel (211-217) oder mindestens eine dynamische Regel (211-217), die durch eine andere Regel (211-217) austauschbar ist, zugeordnet wird,
- wobei die mindestens eine Regel (211-217) mindestens eine Anfangseinstellung und mindestens eine Anpassungsanweisung für mindestens einen Parameter definiert, der beeinflusst, wie eine Autofokussierungsoperation für den Zielpunkt (201) durchgeführt wird,
- wobei die mindestens eine Anpassungsanweisung mindestens eines von einer Anpassung des mindestens einen Parameters, einem Austausch des mindestens einen Parameters, einer Ersetzung der mindestens einen Regel (211-217) durch mindestens eine andere Regel und einer Deaktivierung der mindestens einen Regel (211-217) umfasst, und
- der mindestens eine Parameter mindestens eines von einer Position oder Positionsänderung des Zielpunkts (201), einem Aktivierungs- oder Deaktivierungsmuster der Autofokussierungsoperation (4) für den Zielpunkt (201), einer Frequenz, mit der der Zielpunkt (201) der Autofokussierungsoperation (4) unterzogen wird, mindestens einem Lichtparameter, der bei der Autofokussierungsoperation (4) verwendet wird, und dem Autofokussierungsverfahren, das bei der Autofokussierungsoperation (4) verwendet wird, einschließt,
- Einleiten einer anfänglichen Autofokussierungsoperation (4) für jeden des vordefinierten Satzes von Zielpunkten (201) oder einer Teilmenge davon, die die mindestens eine Anfangseinstellung umfasst, wie sie durch die mindestens eine dem Zielpunkt (201) zugeordnete Regel (211-217) definiert ist,
- Einleiten einer angepassten Autofokussierungsoperation (4) für jeden des vordefinierten Satzes von Zielpunkten (201) oder einer Teilmenge davon auf der Grundlage der mindestens einen Anpassungsanweisung, wie sie durch die mindestens eine dem Zielpunkt (201) zugeordnete Regel (211-217) definiert ist, und
- weiteres Verarbeiten (7) eines Autofokuswertes für mindestens einige der Zielpunkte (201), wobei der Autofokuswert durch die anfängliche Autofokussierungsoperation (4) oder durch die angepasste Autofokussierungsoperation (4) erhalten wird.

2. Autofokussierungssystem (150) nach Anspruch 1, wobei die mindestens eine Anpassungsanweisung mindestens eine von einer zeitabhängigen Anpassung und einer Anpassung als Reaktion auf ein detektiertes Ereignis anweist.

3. Autofokussierungssystem (150) nach Anspruch 1 oder 2, wobei das Autofokussierungssystem (150) dazu angepasst ist, die mindestens eine Regel (211-217) unter Verwendung von Probeninformationen, die eine zu analysierende Probe beschreiben, Vorrichtungsinformationen, die eine Vorrichtung, zu der das Autofokussierungssystem (110) gehört, oder eine oder mehrere Vorrichtungen, die Teil des Autofokussierungssystems (110) sind, beschreiben, und/oder Prozessinformationen, die einen oder mehrere Faktoren beschreiben, die die Probe während eines Experiments beeinflussen, auszuwählen.

4. Autofokussierungssystem (150) nach einem der vorstehenden Ansprüche, wobei das Autofokussierungssystem (150) dazu angepasst ist, die Autofokussierungsprozedur (200) als eine aktuelle Autofokussierungsprozedur durchzuführen und mindestens eine vorhergehende Autofokussierungsprozedur durchzuführen, wobei die mindestens eine Regel (211-217) für die aktuelle Autofokussierungsprozedur (200) jedem der vordefinierten Zielpunkte (201) oder einer Teilmenge davon auf der Basis eines Ergebnisses der mindestens einen vorhergehenden Autofokussierungsprozedur zugeordnet ist.

5. Autofokussierungssystem (150) nach einem der vorstehenden Ansprüche, wobei die angepasste Autofokussierungsoperation (4) für solche Zielpunkte (201) durchgeführt wird, für die die anfängliche Autofokussierungsoperation als nicht zufriedenstellend bestimmt wird, und wobei die angepasste Autofokussierungsoperation (4) nicht für solche Zielpunkte (201) durchgeführt wird, für die die anfängliche Autofokussierungsoperation (4) als zufriedenstellend bestimmt wird.

6. Autofokussierungssystem (150) nach einem der vorstehenden Ansprüche, wobei die Autofokuswerte aus der anfänglichen Autofokussierungsoperation (4) für die Zielpunkte (201) verarbeitet werden, für die die anfängliche Autofokussierungsoperation (4) als zufriedenstellend bestimmt wird, und wobei die Autofokuswerte aus der angepassten Autofokussierungsoperation (4) stattdessen für Zielpunkte (201) verarbeitet werden, für die die angepasste Autofokussierungsoperation (4) als zufriedenstellend bestimmt wird.

7. Autofokussierungssystem (150) nach Anspruch 5 oder 6, wobei mindestens eine von der anfänglichen Autofokussierungsoperation (4) und der angepassten Autofokussierungsoperation (4) als zufriedenstellend bestimmt wird, wenn ein Qualitätsbeschreiber ein vordefiniertes Qualitätskriterium erfüllt, und andernfalls als nicht zufriedenstellend bestimmt wird.

8. Autofokussierungssystem (150) nach einem der vorstehenden Ansprüche, wobei der vordefinierte Satz von Zielpunkten (201) so vordefiniert ist, dass er in einem Muster angeordnet ist, das selektiv einen Bereich einer mikroskopischen Probe (220) abdeckt.

9. Autofokussierungssystem (150) nach einem der vorstehenden Ansprüche, wobei mindestens eine der anfänglichen Autofokussierungsoperationen (4) und der angepassten Autofokussierungsoperationen (4) in einer vordefinierten Reihenfolge für die Zielpunkte (201) eingeleitet wird.

10. Autofokussierungssystem (150) nach Anspruch 9, wobei die vordefinierte Reihenfolge entsprechend einer Geschwindigkeit einer zeitlichen Änderung mindestens eines Merkmals einer mikroskopischen Probe (120) an den Zielpunkten (201) vordefiniert ist.

11. Autofokussierungssystem (150) nach einem der vorstehenden Ansprüche, wobei die Verarbeitung der Autofokuswerte für die Zielpunkte (201), die in den anfänglichen Autofokussierungsoperationen (4) oder in den angepassten Autofokussierungsoperationen (4) erhalten werden, das Definieren einer Fokuskarte einschließt, wobei die Fokuskarte aus den Autofokuswerten der Zielpunkte (201) zusätzliche Fokuspositionen zu denen der Zielpunkte (201) anzeigt.

12. Autofokussierungssystem (150) nach einem der vorstehenden Ansprüche, wobei die mindestens eine Regel, die die mindestens eine Anfangseinstellung und mindestens eine Anpassungsanweisung für mindestens einen Parameter definiert, der beeinflusst, wie ein Autofokussierungsbetrieb durchgeführt wird, eine Anpassung von zwei, drei oder mehr Parametern in einer vorbestimmten Reihenfolge definiert.

13. Autofokussierungsverfahren zur Verwendung in einem Autofokussierungssystem (150) für ein Mikroskop (110), vorzugsweise nach einem der vorstehenden Ansprüche, wobei das Autofokussierungsverfahren eine Autofokussierungsprozedur (200) unter Verwendung einer Autofokussierungstechnik einschließt, wobei die Autofokussierungsprozedur (200) umfasst
- Vordefinieren eines Satzes von Zielpunkten (201) für die Autofokussierung, wobei jedem der vordefinierten Zielpunkte (201) oder einer Teilmenge davon mindestens eine statische Regel (211-217) oder mindestens eine dynamische Regel (211-217), die durch eine andere Regel (211-217) austauschbar ist, zugeordnet wird,
- wobei die mindestens eine Regel (211-217) mindestens eine Anfangseinstellung und mindestens eine Anpassungsanweisung für mindestens einen Parameter definiert, der beeinflusst, wie eine Autofokussierungsoperation für den Zielpunkt (201) durchgeführt wird,
- wobei die mindestens eine Anpassungsanweisung mindestens eines von einer Anpassung des mindestens einen Parameters, einem Austausch des mindestens einen Parameters, einer Ersetzung der mindestens einen Regel (211-217) durch mindestens eine andere Regel und einer Deaktivierung der mindestens einen Regel (211-217) umfasst, und
- der mindestens eine Parameter mindestens eines von einer Position oder Positionsänderung des Zielpunkts (201), einem Aktivierungs- oder Deaktivierungsmuster der Autofokussierungsoperation (4) für den Zielpunkt (201), einer Frequenz, mit der der Zielpunkt (201) der Autofokussierungsoperation (4) unterzogen wird, mindestens einem Lichtparameter, der bei der Autofokussierungsoperation (4) verwendet wird, und dem Autofokussierungsverfahren, das bei der Autofokussierungsoperation (4) verwendet wird, einschließt,
- Einleiten einer anfänglichen Autofokussierungsoperation (4) für jeden des vordefinierten Satzes von Zielpunkten (201) oder einer Teilmenge davon, die die mindestens eine Anfangseinstellung umfasst, wie sie durch die mindestens eine dem Zielpunkt (201) zugeordnete Regel (211-217) definiert ist,
- Einleiten einer angepassten Autofokussierungsoperation (4) für jeden des vordefinierten Satzes von Zielpunkten (201) oder einer Teilmenge davon auf der Grundlage der mindestens einen Anpassungsanweisung, wie sie durch die mindestens eine dem Zielpunkt (201) zugeordnete Regel (211-217) definiert ist, und
- weiteres Verarbeiten (7) eines Autofokuswertes für mindestens einige der Zielpunkte (201), wobei der Autofokuswert durch die anfängliche Autofokussierungsoperation (4) oder durch die angepasste Autofokussierungsoperation (4) erhalten wird.

14. Computerprogramm mit einem Programmcode zur Durchführung des Verfahrens nach Anspruch 13, wenn das Computerprogramm auf einem Prozessor ausgeführt wird.

## Revendications

1. Système (150) de focalisation automatique pour un microscope (110), le système (110) de focalisation automatique étant adapté pour effectuer une procédure (200) de focalisation automatique, la procédure (200) de focalisation automatique comprenant
- la prédéfinition d'un ensemble de points cibles (201) pour la focalisation automatique, dans lequel au moins une règle (211 à 217) statique ou au moins une règle (211 à 217) dynamique échangeable par une règle (211 à 217) différente est associée à chacun des points cibles (201) prédéfinis ou à un sous-ensemble de ceux-ci,
- l'au moins une règle (211 à 217) définissant au moins un réglage initial et au moins une instruction d'adaptation pour au moins un paramètre influençant la manière dont une opération de focalisation automatique est effectuée pour le point cible (201),
- l'au moins une instruction d'adaptation comprenant au moins un parmi une adaptation de l'au moins un paramètre, un échange de l'au moins un paramètre, une substitution de l'au moins une règle (211 à 217) par au moins une règle différente, et une désactivation de l'au moins une règle (211 à 217), et
- l'au moins un paramètre incluant au moins un parmi une position ou un changement de position du point cible (201), un modèle d'activation ou de désactivation de l'opération (4) de focalisation automatique pour le point cible (201), une fréquence à laquelle le point cible (201) est soumis à l'opération (4) de focalisation automatique, au moins un paramètre d'éclairage utilisé dans l'opération (4) de focalisation automatique, et le procédé de focalisation automatique utilisé dans l'opération (4) de focalisation automatique,
- l'initiation pour chacun parmi l'ensemble prédéfini de points cibles (201) ou un sous-ensemble de ceux-ci d'une opération (4) de focalisation automatique initiale comprenant l'au moins un paramètre initial tel que défini par l'au moins une règle (211 à 217) associée au point cible (201),
- l'initiation pour chacun parmi l'ensemble prédéfini de points cibles (201) ou un sous-ensemble de ceux-ci d'une opération (4) de focalisation automatique adaptée basée sur l'au moins une instruction d'adaptation telle que définie par l'au moins une règle (211 à 217) associée au point cible (201), et
- le traitement supplémentaire (7) d'une valeur de focalisation automatique pour au moins certains des points cibles (201), la valeur de focalisation automatique étant obtenue par l'opération (4) de focalisation automatique initiale ou par l'opération (4) de focalisation automatique adaptée.

2. Système (150) de focalisation automatique selon la revendication 1, dans lequel l'au moins une instruction d'adaptation instruit au moins une parmi une adaptation en fonction du temps et une adaptation en réaction à un événement détecté.

3. Système (150) de focalisation automatique selon la revendication 1 ou la revendication 2, le système (150) de focalisation automatique étant adapté pour sélectionner l'au moins une règle (211 à 217) à l'aide d'une information d'échantillon décrivant un échantillon à analyser, l'information d'appareil décrivant un dispositif dont le système (110) de focalisation automatique fait partie d'un ou de plusieurs dispositifs qui forment une partie du système (110) de focalisation automatique et/ou l'information de procédé décrivant un ou plusieurs facteurs influençant l'échantillon au cours d'une expérience.

4. Système (150) de focalisation automatique selon l'une quelconque des revendications précédentes, le système (150) de focalisation automatique étant adapté pour effectuer la procédure (200) de focalisation automatique en tant que procédure de focalisation automatique courante et pour effectuer au moins une procédure de focalisation automatique précédente, dans lequel l'au moins une règle (211 à 217) pour la procédure (200) de focalisation automatique courante est associée à chacun des points cibles (201) prédéfinis ou à un sous-ensemble de ceux-ci sur la base d'un résultat de l'au moins une procédure de focalisation automatique précédente.

5. Système (150) de focalisation automatique selon l'une quelconque des revendications précédentes, dans lequel l'opération (4) de focalisation automatique adaptée est effectuée pour ces points cibles (201) pour lesquels l'opération de focalisation automatique initiale est déterminée comme n'étant pas satisfaisante, et dans lequel l'opération (4) de focalisation automatique adaptée n'est pas effectuée pour ces points cibles (201) pour lesquels l'opération (4) de focalisation automatique initiale est déterminée comme étant satisfaisante.

6. Système (150) de focalisation automatique selon l'une quelconque des revendications précédentes, dans lequel les valeurs de focalisation automatique issues de l'opération (4) de focalisation automatique initiale sont traitées pour les points cibles (201) pour lesquels l'opération (4) de focalisation automatique initiale est déterminée comme étant satisfaisante et dans lequel les valeurs de focalisation automatique issues de l'opération (4) de focalisation automatique adaptée sont plutôt traitées pour des points cibles (201) pour lesquels l'opération (4) de focalisation automatique adaptée est déterminée comme étant satisfaisante.

7. Système (150) de focalisation automatique selon la revendication 5 ou la revendication 6, dans lequel au moins une parmi l'opération (4) de focalisation automatique initiale et l'opération (4) de focalisation automatique adaptée est déterminée comme étant satisfaisante si un descripteur de qualité remplit un critère de qualité prédéfini et est sinon déterminée comme étant insatisfaisante.

8. Système (150) de focalisation automatique selon l'une quelconque des revendications précédentes, dans lequel l'ensemble prédéfini de points cibles (201) est prédéfini pour être agencé selon un motif recouvrant sélectivement une zone d'un échantillon microscopique (220).

9. Système (150) de focalisation automatique selon l'une quelconque des revendications précédentes, dans lequel au moins des opérations parmi les opérations (4) de focalisation automatique initiales et les opérations (4) de focalisation automatique adaptées sont initiées dans une séquence prédéfinie pour les points cibles (201).

10. Système (150) de focalisation automatique selon la revendication 9, dans lequel la séquence prédéfinie est prédéfinie selon une vitesse d'un changement temporel d'au moins une particularité d'un échantillon microscopique (120) au niveau des points cibles (201).

11. Système (150) de focalisation automatique selon l'une quelconque des revendications précédentes, dans lequel le traitement des valeurs de focalisation automatique pour les points cibles (201) qui sont obtenues dans les opérations (4) de focalisation automatique initiales ou dans les opérations (4) de focalisation automatique adaptées inclut la définition d'une carte de focalisation, la carte de focalisation indiquant des positions de focalisation supplémentaires à celle des points cibles (201) à partir des valeurs de focalisation automatique des points cibles (201).

12. Système (150) de focalisation automatique selon l'une quelconque des revendications précédentes, dans lequel l'au moins une règle définissant l'au moins un réglage initial et l'au moins une instruction d'adaptation pour au moins un paramètre influençant la manière dont une opération de focalisation automatique est effectuée définit une adaptation de deux, trois paramètres ou plus dans une séquence prédéterminée.

13. Procédé de focalisation automatique à utiliser dans un système (150) de focalisation automatique pour un microscope (110), de préférence selon l'une quelconque des revendications précédentes, le procédé de focalisation automatique incluant une procédure (200) de focalisation automatique utilisant une technique de focalisation automatique, la procédure (200) de focalisation automatique comprenant
- la prédéfinition d'un ensemble de points cibles (201) pour la focalisation automatique, dans lequel au moins une règle (211 à 217) statique ou au moins une règle (211 à 217) dynamique échangeable par une règle (211 à 217) différente est associée à chacun des points cibles (201) prédéfinis ou à un sous-ensemble de ceux-ci,
- l'au moins une règle (211 à 217) définissant au moins un réglage initial et au moins une instruction d'adaptation pour au moins un paramètre influençant la manière dont une opération de focalisation automatique est effectuée pour le point cible (201),
- l'au moins une instruction d'adaptation comprenant au moins un parmi une adaptation de l'au moins un paramètre, un échange de l'au moins un paramètre, une substitution de l'au moins une règle (211 à 217) par au moins une règle différente, et une désactivation de l'au moins une règle (211 à 217), et
- l'au moins un paramètre incluant au moins un parmi une position ou un changement de position du point cible (201), un modèle d'activation ou de désactivation de l'opération (4) de focalisation automatique pour le point cible (201), une fréquence à laquelle le point cible (201) est soumis à l'opération (4) de focalisation automatique, au moins un paramètre d'éclairage utilisé dans l'opération (4) de focalisation automatique, et le procédé de focalisation automatique utilisé dans l'opération (4) de focalisation automatique,
- l'initiation pour chacun de l'ensemble prédéfini de points cibles (201) ou d'un sous-ensemble de ceux-ci d'une opération (4) de focalisation automatique initiale comprenant l'au moins un réglage initial tel que défini par l'au moins une règle (211 à 217) associée au point cible (201),
- l'initiation pour chacun de l'ensemble prédéfini de points cibles (201) ou d'un sous-ensemble de ceux-ci d'une opération (4) de focalisation automatique adaptée basée sur l'au moins une instruction d'adaptation telle que définie par l'au moins une règle (211 à 217) associée au point cible (201), et
- le traitement supplémentaire (7) d'une valeur de focalisation automatique pour au moins certains des points cibles (201), la valeur de focalisation automatique étant obtenue par l'opération (4) de focalisation automatique initiale ou par l'opération (4) de focalisation automatique adaptée.

14. Programme d'ordinateur comportant un code de programme pour effectuer le procédé selon la revendication 13 lorsque le programme d'ordinateur est exécuté sur un processeur.
